# EUROPÄISCHE PATENTSCHRIFT

(11) **EP 3 573 993 B1**
(45) Veröffentlichungstag und Bekanntmachung des Hinweises auf die Patenterteilung: **09.12.2020**
(21) Anmeldenummer: 18701480.8
(22) Anmeldetag: 25.01.2018
(51) Int. Cl.: C07F 11/00, B01J 31/22

(54) **MOLYBDÄN- UND WOLFRAM-ALKYLIDIN-N-HETEROZYKLISCHE CARBEN-KOMPLEXE**
MOLYBDENUM AND TUNGSTEN ALKYLIDYNE-N-HETEROCYCLIC CARBENE COMPLEXES
COMPLEXES CARBÈNES N-HÉTÉROCYCLIQUES DE TYPE ALKYLIDINES RENFERMANT DU MOLYBDÈNE ET DU TUNGSTÈNE

(30) Priorität: 25.01.2017 DE 102017101431
(43) Veröffentlichungstag der Anmeldung: 04.12.2019
(73) Patentinhaber: Universität Stuttgart, 70174 Stuttgart (DE)
(72) Erfinder: BUCHMEISER, Michael R., 73630 Remshalden (DE); KOY, Maximilian, 70806 Kornwestheim (DE)
(74) Vertreter: Held, Stephan
(86) Internationale Anmeldenummer: PCT/EP2018/051836
(87) Internationale Veröffentlichungsnummer: WO 2018/138204

(56) Entgegenhaltungen:
- DONATELA E. BELLONE ET AL: "Highly Selective Molybdenum ONO Pincer Complex Initiates the Living Ring-Opening Metathesis Polymerization of Strained Alkynes with Exceptionally Low Polydispersity Indices", JOURNAL OF THE AMERICAN CHEMICAL SOCIETY, Bd. 137, Nr. 2, 21. Januar 2015 (2015-01-21), Seiten 850-856, XP55461418, ISSN: 0002-7863, DOI: 10.1021/ja510919v in der Anmeldung erwähnt

## Beschreibung

Die Erfindung betrifft Molybdän- und Wolfram-Alkylidin-N-heterozyklische Carben Komplexe, Verfahren zu deren Herstellung sowie deren Verwendung in der Alkinmethathese.

Die Alkinmetathese ist ein bedeutendes Werkzeug der synthetischen präparativen organischen Chemie und beinhaltet die Reaktion zwischen zwei Alkingruppen mit Hilfe von Metallalkylidinen (A. Fürstner, in Angew. Chem. Int. Ed. 2013, 52, 2794). Daneben ermöglichen Metallalkylidine die Herstellung von Polymeren aus zyklischen Olefinen (S. S. Nadif, T. Kubo, S. A. Gonsales, S. VenkatRamani, I. Ghiviriga, B. S. Sumerlin, A. S. Veige, J. Am. Chem. Soc. 2016, 138, 6408).

Die Alkinmetathese wurde zuerst von Pennella *et al.* (F. Pennella, R. L. Banks, G. C. Bailey, Chem. Commun. 1968, 1548) mit einem auf Silika immobilisierten Wolframoxid beschreiben. Mortreux und Mitarbeiter beschrieben 1974 dann den ersten homogenen Katalysator basierend auf Molybänhexacarbonyl und Resorcinol (A. Mortreux, M. Blanchard, J. Chem. Soc., Chem. Commun. 1974, 786). Beide vorgenannten Systeme hatten allerdings den Nachteil einer hohen erforderlichen Reaktionstemperatur (>100°C) und basierten auf einer unbekannten katalytisch aktiven Spezies.

Der erste definierte Katalysator zur Alkinmetathese wurde von Schrock et al. entwickelt (R. R. Schrock, Science 1983, 219, 13). Dabei handelte es sich um den Tris(*tert*-butanolat)wolfram(IV)-*tert*-butylmethylidin. Zahlreiche weitere Wolframtrisalkoxy-*tert*-butylmethylidine konnten in der Folge entwickelt werden, wobei jedoch eine Erweiterung auf analoge Molybdänverbindungen durch schlechte Ausbeuten limitiert war. Es konnten dennoch diverse Molybdäntrisalkoxy-*tert*-butylmethylidine isoliert werden, die mit simplen Alkinen reagieren (L. G. McCullough, R. R. Schrock, J. Am. Chem. Soc. 1984, 106, 4067; L. G. McCullough, R. R. Schrock, J. C. Dewan, J. C. Murdzek, J. Am. Chem. Soc. 1985, 107, 5987).

Von Tamm *et al.* wurde später der erste Katalysator zur effektiven Alkinmetathese von terminalen Alkinen entwickelt (B. Haberlag, M. Freytag, C. G. Daniliuc, P. G. Jones, M. Tamm, Angew. Chem. Int. Ed. 2012, 51, 13019), der auf 2,4,6-Trimethylbenzylidin-Komplexen in Form von [MesC≡M{OC(CF₃)₂Me}₃] mit M = Mo oder W beruht.

Zwischenzeitlich wurde auch über die Verwendung von Katalysatoren mit multidentaten Liganden, wie z.B. einem 2,6-bis(hydroxyphenyl)pyridinlgand, der über das Pyridin-Stickstoff und die zwei Phenolsauerstoffatome an ein Molybdänzentralatom koordiniert (D. E. Bellone, J. Bours, E. H. Menke, F. R. Fischer, J. Am. Chem. Soc. 2015, 137, 850).

Ein Nachteil der bisher bekannten Katalysatoren zur Alkinmetathese besteht bisher darin, dass diese hauptsächlich auf Alkoxiden beruhen, wodurch Variationen in der Ligandensphäre schwierig durchzuführen und auch keine kationischen Systeme darstellbar sind. Gerade kationische Systeme erscheinen jedoch aufgrund der zu erwartenden stärkeren Elektrophilie grundsätzlich als besonders geeignet für die Alkinmetathese. Es besteht daher ein starker Bedarf an maßgeschneiderten Katalysatoren für Alkinmethathesereaktionen und für die Polymerisation von zyklischen Olefinen, mit denen eine Verbesserung der Stabilität, der Aktivität und der Produktivität erzielt werden kann. Die vorliegende Erfindung befasst sich mit diesem Bedarf.

Die vorstehend geschilderte Aufgabe wird erfindungsgemäß gelöst durch einen Alkylidin N-heterozyklischen Carben Komplex auf Basis von Molybdän oder Wolfram wie er durch Anspruch 1 angegeben ist. Spezifischer wird die vorstehend geschilderte Aufgabe gelöst durch einen neutralen oder kationischen Metallalkylidin-N-heterozyklischer Carben (NHC) Komplex gemäß den allgemeinen Formeln I bis VI, 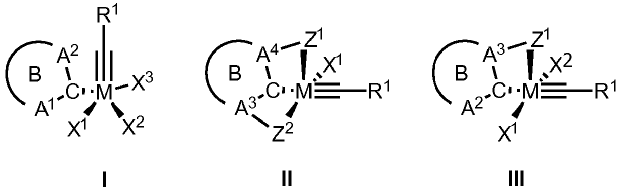 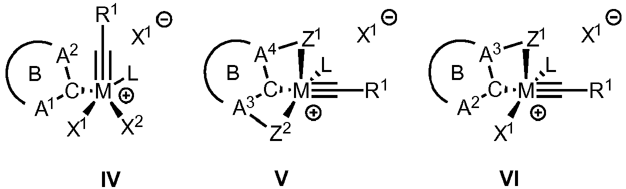
der dadurch gekennzeichnet ist, dass A¹ für NR² oder PR², A² für CR²R^{2'}, NR², PR², O oder S steht, A³ bzw. A⁴ für S, N oder P steht, C für ein Carben-Kohlenstoffatom steht,
R², R^{2'} unabhängig voneinander für einen C₃-C₁₈ Trialkylsilyl, Triarylsilyl, ArylAlkylsilyl, einen linearen, teilzyklischen oder verzweigten C₁-C₁₈-Alkyl-, einen C₃-C₁₂-Cycloalkyl-, einen linearen, teilzyklischen oder verzweigten C₁-C₁₈-Alkoxy-, einen C₃-C₁₂-Cycloalkoxy-, einen linearen, teilzyklischen oder verzweigten C₆-C₁₀₀-Polyoxaalkyl-, einen C₅-C₁₄-Aryl- oder -Heteroaryl-Rest, einen C₅-C₁₄-Aryloxy- oder -Heteroaryloxy-Rest, einen C₅-C₁₄-Arylthio- oder -Heteroarylthio-Rest, einen linearen, teilzyklischen oder verzweigten C₁-C₁₈-Perhaloalkyl-, einen linearen, teilzyklischen oder verzweigten C₁-C₁₈-Perhaloalkoxy-, einen linearen, teilzyklischen oder verzweigten teilhalogenierten C₁-C₁₈-Alkyl-, einen linearen, teilzyklischen oder verzweigten teilhalogenierten C₁-C₁₈-Alkoxy-, einen per- oder teilhalogenierten C₆-C₁₄-Aryl-, einen per- oder teilhalogenierten C₆-C₁₄-Aryloxyrest, steht, wobei Halogen = F, Cl, Br, I ist, und, wenn A¹ und A² jeweils für NR² oder PR² stehen, R² gleich oder verschieden sind,
der Ring B ein unsubstituierter oder ein ein- oder mehrfach substituierter 5- bis 7-gliedriger Ring ist, der neben A¹, A², A³ bzw. A⁴ weitere Heteroatome in Form von Stickstoff, Phosphor, Sauerstoff oder Schwefel enthalten kann und dessen Substituenten die für R² beschriebene Bedeutung haben können,
X¹, X² bzw. X³ in Formeln I bis VI gleich oder verschieden sind und aus der Gruppe umfassend Halogen, C₁-C₁₈ Carboxylate, C₁-C₁₈-Alkoxide, halogenierte, teilhalogenierte, lineare, teilzyklischen oder verzweigte C₁-C₁₈ Alkoxide, C₁-C₁₈ mono- oder polyhalogenierte Carboxylate, un-, ein- oder mehrfach substituierte C₆-C₁₈-Mono-, Bi- oder Terphenolate, Trifluormethansulfonat, nicht koordinierende Anionen, inbesonders Tetrakis(3,5-bis(trifluormethyl)phenyl)borat, Tetrakis(pentafluorophenyl)borat, Tetrakis(nonafluoro-t-butoxy)aluminat, Tetrafluoroborat, Hexafluorophosphat und Hexafluoroantimonat ausgewählt sind, wobei die Substituenten an den Mono-, Bi- oder Terphenolaten neben Halogen C₁-C₁₈-Alkoxy-, halogenierte C₁-C₁₈ Alkoxy- oder C₁-C₁₈ Alkylgruppen sein können oder dieselbe Bedeutung haben wie R²,
M in den Formeln I, II, III, IV, V oder VI für Mo oder W steht,
L eine freie Koordinationsstelle oder ein koordinierendes Lösemittel ist, insbesondere in Form von Diethylether, Acetonitril, Tetrahydrofuran, Trimethylacetonitril, Pyridin oder Lutidin,
in den Formeln IV, V oder VI auch mehrere Lösemittelmoleküle koordinieren können, wobei diese die oben für L genannte Bedeutung haben können,
R¹ in den Formeln I bis VI unabhängig voneinander H oder ein aliphatischer oder aromatischer Rest ist, insbesondere eine lineare oder verzweigte C₁-C₁₈ AlkylGruppe, bevorzugt in Form einer *tert-*Butyl-*,* Methyl-, 4-Methoxyphenyl- oder Ferrocenyl-Gruppe, oder eine unsubstituierte oder ein- oder mehrfach substituierte C₆-C₁₄-Aryl-Gruppe, wobei die Substituenten die für R¹2genannten Bedeutungen haben, und
Z¹ und Z² unabhängig voneinander eine lineare, teilzyklische oder verzweigte C₁-C₁₀-Alkylenoxy-, eine lineare, teilzyklische oder verzweigte C₁-C₁₀-Alkylenthio-, eine lineare, teilzyklische oder verzweigte C₁-C₁₀-Alkylen-NR²-, eine C₆-C₁₄-Arylenoxy-, eine per- oder teilfluorierte C₆-C₁₄-Arylenoxy-, eine per- oder teilchlorierte C₆-C₁₄-Arylenoxy-, eine per- oder teilbromierte C₆-C₁₄-Arylenoxy-, eine C₆-C₁₄-Arylenthio-, eine per- oder teilfluorierte C₆-C₁₄-Arylenthio-, eine per- oder teilchlorierte C₆-C₁₄-Arylenthio-, eine per- oder teilbromierte C₆-C₁₄-Arylenthio- oder eine C₆-C₁₄-Arylen-NR²-, eine per- oder teilfluorierte C₆-C₁₄-Arylen-NR²-, eine per- oder teilchlorierte C₆-C₁₄-Arylen-NR²-, eine per- oder teilbromierte C₆-C₁₄-Arylen-NR²-, eine C₆-C₁₄-Arylen-PR²-, eine per- oder teilfluorierte C₆-C₁₄-Arylen-PR²-, eine per- oder teilchlorierte C₆-C₁₄-Arylen-PR²-, eine per- oder teilbromierte C₆-C₁₄-Arylen-PR²-, eine Carboxyl, eine Thiocarboxyl oder eine Dithiocarboxyl-Gruppe sind,
sowie die Verwendung dieser Verbindungen als Katalysator für Alkinmethathesereaktionen, sowie für die Polymerisation zyklischer Olefine.

Bevorzugte Ausgestaltungen der erfindungsgemäßen Komplexe ergeben sich aus den Ansprüchen 2 bis 7, während der Anspruch 9 eine bevorzugte Ausgestaltung der erfindungsgemäßen Verwendungslehre darstellt.

Der Begriff "Halogen" umfasst nach allgemeinem Verständnis und wie hier verwendet Fluor, Chlor, Brom und Iod.

Für die erfindungsgemäßen Carbenkomplexe der allgemeinen Formeln I bis VI ist es bevorzugt, wenn die für die Substituenten R² und R^{2'} erwähnte C₃-C₁₈ Trialkylsilylgruppe in Form einer C₃-C₁₀ Trialkylsilylgruppe vorliegt. Als besonders geeignet ist in diesem Fall die Trimethylsilyl- oder die *t*-Butyldimethylsilyl-Gruppe zu nennen.

Bei der erwähnten Triarylsilylgruppe handelt es sich bevorzugt um eine Triphenylsilylgruppe.

Bei der erwähnten Arylalkylsilylgruppe handelt es sich bevorzugt um eine Diphenylmethylsilyl oder eine Phenyldimethylsilylgruppe.

Die lineare, teilzyklische oder verzweigte C₁-C₁₈-Alkylgruppe liegt bevorzugt als C₁-C₁₀-Alkylgruppe, besonders bevorzugt als C₁-C₇-Alkylgruppe und insbesondere als C₁-C₄-Alkylgruppe vor. Besonders geeignet sind Methyl, Ethyl und Propylgruppen.

Für die C₃-C₁₂-Cycloalkylgruppe ist es bevorzugt, wenn diese in Form einer C₃-C₆-Cycloalkylgruppe vorliegt. Als geeignete Gruppen sind in diesem Zusammenhang Cyclopentyl und Cyclohexyl zu nennen.

Die lineare, teilzyklische oder verzweigte C₁-C₁₈-Alkoxygruppe liegt bevorzugt als C₁-C₁₀-Alkoxygruppe, besonders bevorzugt als C₁-C₇-Alkoxygruppe und insbesondere als C₁-C₄-Alkoxygruppe vor. Besonders geeignet sind Methoxy-, Ethoxy- und Propoxygruppen.

Für die C₃-C₁₂-Cycloalkoxygruppe ist es bevorzugt, wenn diese in Form einer C₃-C₆-Cycloalkoxygruppe vorliegt. Als geeignete Gruppen sind in diesem Zusammenhang Cyclopentyloxy und Cyclohexyloxy zu nennen.

Fall es sich bei dem Substituenten R² oder R^{2'} um einen linearen, teilzyklischen oder verzweigten C₆-C₁₀₀-Polyoxaalkyl-Rest handelt, ist es vorteilhaft, wenn dieser in Form eines C₆-C₃₀-Polyoxaalkyl-Rests und insbesondere in Form eines C₆-C₁₅-Polyoxaalkyl-Rests vorliegt. Geeignete Reste sind z.B. Methyloxyethyl oder Methyloxyethyloxy.

Der C₅-C₁₄-Aryl- oder -Heteroarylrest kann substituiert oder unsubstituiert sein, und liegt bevorzugt in Form eines C₆-C₁₄-Aryl- oder -Heteroarylrests, insbesondere eines C₆-C₁₀-Aryl- oder -Heteroaryl-Rests vor. In diesem Zusammenhang haben sich Phenyl-, Naphtyl- oder Ferrocenylreste als besonders geeignet herausgestellt.

Als C₅-C₁₄-Aryloxy- oder Hetreoaryloxyreste, die ebenfalls substituiert oder unsubstituiert sein können, sind C₆-C₁₄-Aryloxy-Reste und insbesondere C₆-C₁₀-Aryloxy-Reste bevorzugt. Besonders geeignete unsubstituierte Aryloxyreste sind Phenyloxy oder Naphtyloxy.

Der C₅-C₁₄-Arylthio oder -Heteroarylthio-Rest ist bevorzugt ein C₅-C₁₀-Arylthio oder -Heteroarylthio-Rest, und kann ebenfalls substituiert oder unsubstituiert sein.

Der lineare, teilzyklische oder verzweigte C₁-C₁₈-perhalogenierte Alkyl-Rest liegt insbesondere in Form eines C₁-C₁₀-perhalogenierten Alkyl-Rests, bevorzugt in Form eines C₁-C₇-perhalogenierten Alkyl-Rests, und besonders bevorzugt in Form eines C₁-C₄-perhalogenierten-Restes vor, wobei Trifluormethyl als Rest am meisten bevorzugt ist.

Ebenso liegt der lineare, teilzyklische oder verzweigte C₁-C₁₈-perhalogenierte Alkoxy-Rest, insbesondere in Form eines C₁-C₁₀-perhalogenierten Alkoxy-Rests, bevorzugt in Form eines C₁-C₇-perhalogenierten Alkoxy-Rests und besonders bevorzugt in Form eines C₁-C₄-perhalogenierten Alkoxy-Rest vor, wobei Trichlormethyl als Rest am meisten bevorzugt ist.

Der lineare, teilzyklische oder verzweigte teilhalogenierte C₁-C₁₈-Alkyl-Rest liegt bevorzugt als teilhalogenierter C₁-C₁₀-Alkyl-Rest, und insbesondere als teilhalogenierter C₁-C₇-Alkyl-Rest vor. Ein Beispiel für einen solchen Rest ist Trifluorethyl.

Der lineare, teilzyklische oder verzweigte teilhalogenierte C₁-C₁₈-Alkoxy-Rest liegt bevorzugt als teilhalogenierter C₁-C₁₀-Alkoxy-Rest, und insbesondere als teilhalogenierter C₁-C₇-Alkoxy-Rest vor. Ein Beispiel für einen solchen Rest ist Trichlorethyl.

Der perhalogenierte C₅-C₁₄-Aryl-Rest liegt insbesondere als perhalogenierter C₆-C₁₄-Aryl-Rest, bevorzugt als perhalogenierter C₆-C₁₀-Aryl-Rest und besonders bevorzugt in Form eines Pentafluorophenylrests vor.

Ebenso liegt der teilhalogenierte C₅-C₁₄-Aryl-Rest insbesondere als teilfluorierter C₆-C₁₄-Aryl-Rest, bevorzugt als teilhalogenierter C₆-C₁₀-Aryl-Rest und besonders und bevorzugt in Form von Fluorophenyl vor.

Der perhalogenierte C₅-C₁₄-Aryloxy-Rest liegt insbesondere als perhalogenierter C₆-C₁₄-Aryloxy-Rest, bevorzugt als perhalogenierter C₆-C₁₀-Aryloxy-Rest und besonders und bevorzugt in Form eines Pentachlorophenylrests vor.

Ebenso liegt der teilhalogenierte C₅-C₁₄-Aryloxy-Rest insbesondere als teilhalogenierter C₆-C₁₄-Aryloxy-Rest, bevorzugt als teilhalogenierter C₆-C₁₀-Aryloxy-Rest und besonders und bevorzugt in Form von Chlorophenyl vor.

Für die vorstehend erläuterten perhalogenierten Alkyl- und Alkoxyreste, teilhalogenierten Alkyl- und Alkoxyreste, per- und teilhalogenierten C₅-C₁₄-Aryl- und Aryloxyreste gilt, dass durch die Angabe "Halogen" bzw. "halogeniert" alle stabilen Halogene (d.h. Fluor, Chlor, Brom und Iod) sowie Mischungen dieser Halogene umfasst sind. In einer bevorzugten Ausführungsform bezeichnen die Angaben "perhalogeniert" und "teilhalogeniert" die Substitution des entsprechenden Restes mit nur einem Halogen (d.h. mit Fluor, Chlor, Brom oder Iod). Besonders bevorzugt handelt es sich bei dem per- oder teilhalogenierten Rest um einen perfluorierten oder perchlorierten Rest.

Wenn A¹ un^{d} A² jeweils für NR² oder PR² stehen, können die Reste R² und R^{2'} gleich oder verschieden sein.

Generell gilt es als bevorzugt für den Substituenten R², sofern er direkt an einen der Substituenten A¹ oder A² gebunden ist, dass er ein von Wasserstoff verschiedener Substituent ist.

Im Rahmen der vorliegenden Erfindung steht A¹ bevorzugt für NR². Unabhängig davon steht A² bevorzugt für NR² oder S und besonders bevorzugt für NR².

Bei dem Ring B handelt es sich um einen heterozyklischen 5- bis 7-gliedrigen Ring, der in direkter Nachbarschaft zum carbenoiden Kohlenstoff (d.h. dem Kohlenstoffatom, das in Form eines Carbens vorliegt) mindestens ein Stickstoffatom sowie weiterhin entweder ein weiteres Stickstoffatom, Schwefelatom, Sauerstoffatom, Phosphoratom oder quartäres Kohlenstoffatom aufweist. Bevorzugt weist der heterozyklische 5- bis 7-gliedrige Ring in direkter Nachbarschaft zum carbenoiden Kohlenstoff mindestens ein Stickstoffatom sowie weiterhin entweder ein weiteres Stickstoffatom oder Schwefelatom auf. Die Stickstoffatome bzw. Phosphoratome weisen in diesem Fall einen Substituenten R² auf, der nicht in Form vom Wasserstoff vorliegt, so dass es sich bei den Stickstoffatomen im Ring B um tertiäre Amine bzw. Phosphine handelt. Zudem kann der heterozyklische Ring B substituiert sein, zum Beispiel mit Phenyl oder mit einem weiteren, vorzugsweise aromatischen Ring ein bizyklisches oder polyzyklisches System bilden. So kann es sich bei dem Ring B beispielsweise um einen benzannelierten, naphthannellierten, Phenanthren- oder Anthrachinon-annellierten 5- bis 7-gliedrigen Ring handeln. Zudem kann der Ring B weitere Substituenten in Form von Halogenen, C₁-C₁₈-Carbonsäureestern, Carbonsäureamiden, Sulfonamiden, Sulfonsäureestern, Alkylnitrilen, Ethern, Thiethern, Aminen aufweisen. Für die Substituenten ist es bevorzugt, wenn sie 1 bis 8 Kohlenstoffatome enthalten. Besonders bevorzugte Substituenten sind Fluor, Chlor und Brom, sowie Methoxycarbonyl und Ethoxycarbonyl.

Im Rahmen der vorliegenden Erfindung hat es sich als besonders zweckmäßig erwiesen, wenn der Ring B ein aus der Gruppe, umfassend 1,3-disubstituierte Imidazol-2-ylidene, 1,3-disubstituierte Imidazolin-2-ylidene, 1,3-disubstituierte Imidazol-5-ylidene, 1,3-disubstituierte Tetrahydropyrimidin-2-ylidene, 1,3-disubstituierte Diazepin-2-ylidene, 1,3-disubstituierte Dihydrodiazepin-2-ylidene, 1,3-disubstituierte Tetrahydrodiazepin-2-ylidene, N-substituierte Thiazol-2-ylidene, N-substituierte Thiazolin-2-ylidene, N-substituierte Triazol-2-ylidene, N-substituierte Dihydrotriazol-2-ylidene, ein- oder mehrfach substituierte Triazolin-2-ylidene, N-substituierte Thiadiazol-2-ylidene, ein- oder mehrfach substituierte Thiadiazolin-2-ylidene, ein- oder mehrfach substituierte Tetrahydrotriazol-2-ylidene, ein- oder mehrfach substituierte 1,2,3-Triazol-5-ylidene oder ein- oder mehrfach substituierte Oxazol-2-ylidene oder 1,2,4-Triazol-3-ylidene ausgewählter Heterozyklus ist.

Von letzteren gelten 1,3-disubstituierte Imidazol-2-ylidene, 1,3-disubstituierte Imidazolin-2-ylidene, 1,3-disubstituierte Imidazol-5-ylidene, N-substituierte Thiazol-2-ylidene und N-substituierte Thiazolin-2-ylidene im Rahmen der vorliegenden Erfindung als besonders bevorzugt.

In einer ganz besonders bevorzugten Ausführungsform ist der Ring B von einem 1,3-disubstituierten Imidazol-2-yliden oder einem 1,3-disubstituierten Imidazolin-2-yliden abgeleitet. Der Substituent R² besteht in diesem Fall zweckmäßigerweise aus einem linearen C₁-C₆-Alkyl-Rest, insbesondere in Form eines Methyl-, i-Propyl oder t-Butylrestes, einem zyklischen C₃-C₈-Alkyl-Rest, insbesondere in Form von Cyclohexyl, oder eines substituierten Aryl-Restes, insbesondere in Form eines 2,4,6-Trimethylphenyl-Restes (auch als Mesityl-Gruppe bezeichnet).

Bei dem Metall in dem Carbenkomplexen der allgemeinen Formeln I bis IV handelt es sich um Mo oder W, bevorzugt um Mo.

Liegt mindestens einer der drei Substituenten X¹, X² beziehungsweise X³ in Form eines C₁-C₁₈-Carboxylats vor, so ist es bevorzugt, wenn es sich dabei um ein C₁-C₈-Carboxylat handelt. Als besonders geeignete Carboxylate sind das Acetat, Propionat und Benzoat zu nennen.

Liegt mindestens einer der drei Substituenten X¹, X² beziehungsweise X³ in Form eines C₁-C₁₈-Alkoxids vor, so ist es bevorzugt, wenn es sich dabei um ein C₁-C₈-Alkoxid handelt. Als besonders geeignete Alkoxide sind das 2-Propoxid und das tert-Butoxid zu nennen.

Liegt mindestens einer der drei Substituenten X¹, X² beziehungsweise X³ in Form eines per- oder teilhalogenierten C₁-C₁₈-Alkoxids vor, so ist es bevorzugt, wenn es sich dabei um ein per- oder teilhalogeniertes C₁-C₈-Alkoxid handelt. Besonders geeignet sind fluorierten Alkoxide wie das Hexafluoro-2-propoxid und Hexafluoro-*tert*-butoxid zu nennen.

Liegt mindestens einer der drei Substituenten X¹, X² beziehungsweise X³ in Form eines mono- oder polyhalogenierten C₁-C₁₈-Carboxylats vor, so ist es bevorzugt, wenn es sich dabei um ein mono- oder polyhalogeniertes C₁-C₈-Carboxylat handelt. Als besonders geeignete mono- oder polyhalogenierte C₁-C₁₈-Carboxylate sind Trichloracetat, Trifluoracetat, Pentafluoropropionat, Heptafluorobutyrat, und Pentafluorobenzoat zu nennen.

Bevorzugte un-, ein- oder mehrfach substituierte Mono-, Bi- oder Terphenolate sind das 2,6-Diphenylphenolat, 2',2",6',6"-Tetrakis(2-propyl)-2,6-diphenylphenolat und das 2',2",6',6"-Tetramethyl-2,6-diphenylphenolat.

Generell können die Substituenten X¹, X² beziehungsweise X³ als schwach oder nicht koordinierende Anionen vorliegen. Bei letzteren handelt es sich beispielsweise um anionische P-, B- Al-, oder Sb-basierte Anionen.

Für die Substituenten X¹, X² beziehungsweise X³ haben sich insbesondere schwach koordinierende Substituenten, wie beispielsweise Halogene, Trifluormethansulfonat, und Hexafluoro-*tert*-butoxid sowie Hexafluoro-2-propoxid als besonders zweckmäßig herausgestellt.

Für bevorzugte Ausgestaltungen des Substituenten Z¹ und Z² gilt Folgendes:
- die lineare, teilzyklische oder verzweigte C₁-C₁₀-Alkylenoxy-Gruppe ist bevorzugt eine C₁-C₅-Alkylenoxy-Gruppe, und insbesondere eine Ethylenoxy-Gruppe;
- die lineare, teilzyklische oder verzweigte C₁-C₁₀-Alkylenthio-Gruppe ist bevorzugt eine C₁-C₅-Alkylenthio-Gruppe, und insbesondere eine Ethylenthio-Gruppe;
- die lineare, teilzyklische oder verzweigte C₁-C₁₀-Alkylen-NR²-Gruppe ist bevorzugt eine C₁-C₅-Alkylen-NR²-Gruppe, und insbesondere eine Ethylen-NR²-Gruppe;
- die C₆-C₁₄-Arylenoxy-Gruppe ist bevorzugt eine C₆-C₁₀-Arylenoxy-Gruppe, und insbesondere eine 2-Phenylen-oxygruppe;
- die perfluorierte C₆-C₁₄-Arylenoxy-Gruppe ist bevorzugt eine perfluorierte C₆-C₁₀-Arylenoxy-Gruppe, und insbesondere eine Tetrafluorphenyl-2-en-oxygruppe;
- die teilfluorierte C₆-C₁₄-Arylenoxy-Gruppe ist bevorzugt eine teilfluorierte C₆-C₁₀-Arylenoxy-Gruppe, und insbesondere eine Fluorphenyl-2-en-oxygruppe;
- die perchlorierte C₆-C₁₄-Arylenoxy-Gruppe ist bevorzugt eine perchlorierte C₆-C₁₀-Arylenoxy-Gruppe, und insbesondere eine Tetrachlorphenyl-2-en-oxygruppe;
- die teilchlorierte C₆-C₁₄-Arylenoxy-Gruppe ist bevorzugt eine teilchlorierte C₆-C₁₀-Arylenoxy-Gruppe, und insbesondere eine Chlorphenyl-2-en-oxygruppe;
- die perbromierte C₆-C₁₄-Arylenoxy-Gruppe ist bevorzugt eine perbormierte C₆-C₁₀-Arylenoxy-Gruppe, und insbesondere eine Tetrabromphenyl-2-en-oxygruppe;
- die teilbromierte C₆-C₁₄-Arylenoxy-Gruppe ist bevorzugt eine teilbromierte C₆-C₁₀-Arylenoxy-Gruppe, und insbesondere eine Bromphenyl-2-en-oxygruppe;
- die C₆-C₁₄-Arylenthio-Gruppe ist bevorzugt eine C₆-C₁₀-Arylenthio-Gruppe, und insbesondere eine 2-Phenylen-thiogruppe;
- die perfluorierte C₆-C₁₄-Arylenthio-Gruppe ist bevorzugt eine perfluorierte C₆-C₁₀-Arylenthio-Gruppe, und insbesondere eine Tetrafluorphenyl-2-en-thiogruppe;
- die teilfluorierte C₆-C₁₄-Arylenthio-Gruppe ist bevorzugt eine teilfluorierte C₆-C₁₀-Arylenthio-Gruppe, und insbesondere eine Fluorphenyl-2-en-thiogruppe;
- die perfbromierte C₆-C₁₄-Arylenthio-Gruppe ist bevorzugt eine perbromierte C₆-C₁₀-Arylenthio-Gruppe, und insbesondere eine Tetrabromphenyl-2-en-thiogruppe;
- die teilbromierte C₆-C₁₄-Arylenthio-Gruppe ist bevorzugt eine teilbromierte C₆-C₁₀-Arylenthio-Gruppe, und insbesondere eine Bromphenyl-2-en-thiogruppe;
- die perchlorierte C₆-C₁₄-Arylenthio-Gruppe ist bevorzugt eine perchlorierte C₆-C₁₀-Arylenthio-Gruppe, und insbesondere eine Tetrachlorphenyl-2-en-thiogruppe;
- die teilchlorierte C₆-C₁₄-Arylenthio-Gruppe ist bevorzugt eine teilchlorierte C₆-C₁₀-Arylenthio-Gruppe, und insbesondere eine Chlorphenyl-2-en-thiogruppe;
- die C₆-C₁₄-Arylen-NR²-Gruppe ist bevorzugt eine C₆-C₁₀- Arylen-NR²-Gruppe, und insbesondere eine N-Methylphenyl-2-en- oder N-Ethylphenyl-2-engruppe;
- die perfluorierte C₆-C₁₄-Arylen-NR²-Gruppe ist bevorzugt eine perfluorierte C₆-C₁₀- Arylen-NR²-Gruppe, und insbesondere eine N-Methyltetrafluorophenyl-2-en- oder N-Ethyltetrafluorophenyl-2-engruppe;
- die teilfluorierte C₆-C₁₄-Arylen-NR²-Gruppe ist bevorzugt eine teilfluorierte C₆-C₁₀-Arylen-NR²-Gruppe, und insbesondere eine N-Methylfluorophenyl-2-en- oder N-Ethylfluorophenyl-2-engruppe;
- die perchlorierte C₆-C₁₄-Arylen-NR²-Gruppe ist bevorzugt eine perchlorierte C₆-C₁₀-Arylen-NR²-Gruppe, und insbesondere eine N-Methyltetrachlorophenyl-2-en- oder N-Ethyltetrachlorophenyl-2-engruppe;
- die teilchlorierte C₆-C₁₄-Arylen-NR²-Gruppe ist bevorzugt eine teilchlorierte C₆-C₁₀-Arylen-NR²-Gruppe, und insbesondere eine N-Methylchlorophenyl-2-en- oder N-Ethylchlorophenyl-2-engruppe;
- die perbromierte C₆-C₁₄-Arylen-NR²-Gruppe ist bevorzugt eine perbromierte C₆-C₁₀- Arylen-NR²-Gruppe, und insbesondere eine N-Methyltetrabromphenyl-2-en- oder N-Ethyltetrabromphenyl-2-engruppe;
- die teilbromierte C₆-C₁₄-Arylen-NR²-Gruppe ist bevorzugt eine teibromierte C₆-C₁₀-Arylen-NR²-Gruppe, und insbesondere eine N-Methylbromphenyl-2-en- oder N-Ethylbromphenyl-2-engruppe;
- die C₆-C₁₄-Arylen-PR²-Gruppe ist bevorzugt eine C₆-C₁₀- Arylen-PR²-Gruppe, und insbesondere eine P-Methylphenyl-2-en-, P-Phenyl-phenyl-2-en- oder P-Ethylphenyl-2-engruppe;
- die perfluorierte C₆-C₁₄-Arylen-PR²-Gruppe ist bevorzugt eine perfluorierte C₆-C₁₀-Arylen-PR²-Gruppe, und insbesondere eine P-Methyltetrafluorophenyl-2-en-, Perfluoro-P-phenyl-phenyl-2-en- oder P-Ethyltetrafluorophenyl-2-engruppe;
- die teilfluorierte C₆-C₁₄-Arylen-PR²-Gruppe ist bevorzugt eine teilfluorierte C₆-C₁₀-Arylen-PR²-Gruppe, und insbesondere eine P-Methylfluorophenyl-2-en-oder P-Ethylfluorophenyl-2-engruppe;
- die perchlorierte C₆-C₁₄-Arylen-PR²-Gruppe ist bevorzugt eine perchlorierte C₆-C₁₀-Arylen-PR²-Gruppe, und insbesondere eine P-Methyltetrachlorophenyl-2-en- oder P-Ethyltetrachlorophenyl-2-engruppe;
- die teilchlorierte C₆-C₁₄-Arylen-PR²-Gruppe ist bevorzugt eine teilchlorierte C₆-C₁₀-Arylen-PR²-Gruppe, und insbesondere eine P-Methylchlorophenyl-2-en- oder P-Ethylchlorophenyl-2-engruppe;
- die perbromierte C₆-C₁₄-Arylen-PR²-Gruppe ist bevorzugt eine perbromierte C₆-C₁₀-Arylen-PR²-Gruppe, und insbesondere eine p-Methyltetrabromphenyl-2-en- oder P-Ethyltetrabromphenyl-2-engruppe;
- die teilbromierte C₆-C₁₄-Arylen-PR²-Gruppe ist bevorzugt eine teibromierte C₆-C₁₀-Arylen-PR²-Gruppe, und insbesondere eine P-Methylbromphenyl-2-en- oder P-Ethylbromphenyl-2-engruppe.

Im Rahmen der vorliegenden Erfindung ganz besonders bevorzugt ist der Substituent Z¹ und Z² in den Formeln III und VI ausgewählt aus der Gruppe der 2-Oxy-*o*-phenylene und 2-NR²-*0*-phenylene.

Im Rahmen der vorliegenden Erfindung ganz besonders bevorzugt sind die Substituenten Z¹ und Z² in den Formeln II und V gleich. Als besonders geeignete Substituenten gelten in diesem Fall 2-Oxy-3,5-dialkyl-*o*-phenylen- und insbesondere 2-Oxy-3,5-di-*t*-butyl-*o*-phenylenreste, wobei die Reste über die 1-Position mit dem Ring B verbunden sind.

Dem Substituent R¹ kommt im Rahmen der hier beschriebenen Carbenkomplexe die Aufgabe zu, ein Metallalkylidin zur Verfügung zu stellen, dass einerseits stabil, andererseits jedoch auch noch ausreichend metatheseaktiv ist. Besonders geeignete Substituenten R¹ sind daher große Alkyl- oder Aryl-Reste die eine gute sterische Abschirmung des Metallalkylidins gewährleiten. Demzufolge ist es bevorzugt, wenn R¹ kein Wasserstoffatom ist. Besonders zweckmäßig ist das Kohlenstoffatom in R¹, das in direkter Nachbarschaft zum Metallalkylidin steht, ein quartäres Kohlenstoffatom, das keinen Wasserstoff-Substituenten aufweist. Als Substituenten dieses quartären Kohlenstoffatoms kommen unter anderem auch die für die Substituenten R² ausgeführten Reste in Betracht. Anhand dieser Vorgaben kann ein geeigneter Substituent R¹ fachmännisch ausgewählt werden.

Es hat sich insbesondere als vorteilhaft herausgestellt, wenn R¹ in den Formeln I bis VI für *t*-Butyl, Methyl, ein unsubstituiertes oder substituiertes Phenyl, wie 4-Methoxyphenyl, Ferrocenyl oder CMe₂Ph steht, wobei die Substituenten am Phenyl die gleiche Bedeutung haben können wie R². Meist bevorzugt als Substituent R¹ ist 4-Methoxyphenyl.

Die erfindungsgemäßen Carbenkomplexe gemäß den allgemeinen Formeln IV bis VI enthalten neben den bereits vorstehend erläuterten einen nicht geladenen Liganden, der das Metallzentrum koordiniert. Die Funktion dieses nicht geladenen Liganden besteht darin, das Metallzentrum koordinativ weiter abzusättigen sowie den Metallkomplex zu stabilisieren. Die Liganden sind dabei Elektronen-Donoren und labil, d.h. sie können vom Metallzentrum abdissoziieren und durch Substrat ersetzt werden. Geeignete Liganden sind beispielsweise Diethylether, Tetrahydrofuran, Acetonitril, Trimethylacetonitril, Pyridin oder substituierte Pyridine wie Lutidin.

Die im Vorstehenden beschriebenen erfindungsgemäßen Carbenkomplexe können in Lösung als Katalysator eingesetzt werden, es ist jedoch auch möglich, die Komplexe, beispielsweise mit Hilfe einer Abstandsgruppe oder über die Substituenten X¹ und/oder X², an einem festen Träger zu immobilisieren. Die Abstandsgruppe zwischen dem Trägermaterial und dem Ring B oder den Substituenten X¹ und/oder X² dient dazu, die Metallkomplexe am festen Träger zu fixieren. Die Abstandsgruppe muss dabei vorteilhafter Weise so beschaffen sein, dass der Metallkomplex einen hinreichenden Abstand zum Träger hat, so dass eine gute Zugänglichkeit der Substrate gewährleistet ist. Sie ist dermaßen beschaffen, dass sie zwei funktionelle Gruppen enthält mit denen eine Anbindung einerseits an den Katalysator, und andererseits an den Träger möglich ist. Der Abstand zwischen Träger und Katalysator sollte hingegen nicht so groß sein, dass bimetallische Reaktionen zwischen zwei immobilisierten Metallkomplexen stattfinden können. Weiter sollte die Abstandsgruppe so beschaffen sein, dass sie mittels einfacher chemischer Reaktionen sowohl mit dem Träger als auch mit dem Ring B oder dem Metallzentrum verbunden werden kann. Grundsätzlich kommen dabei alle aliphatischen oder aromatischen α,ω-difunktionalen Verbindungen in Frage.

Als geeignete feste Träger sind in diesem Zusammenhang insbesondere polymere Träger, wie solche auf Basis von Polystyrol/Poly(divinylbenzol) (PS-DVB), vernetzten Poly(methacrylat)en, vernetzten Poly(acrylamid)en aber auch vernetzten Poly(norbornen)en zu nennen. Der Träger hat die Aufgabe, die Anbindung des Katalysators, und dadurch eine heterogene Reaktionsführung zu ermöglichen. Der Träger weist dazu zweckmäßig eine mittlere Teilchengröße im Bereich von 2-1000 Mikrometern, vorzugsweise im Beriech von 20-200 Mikrometern, besonders bevorzugt im Bereich von 40-60 Mikrometern auf und kann porös oder nicht porös sein. Ein besonders geeigneter polymerer Träger ist Polystyrol/Poly(divinylbenzol) (PS-DVB).

Als Abstandsgruppe kann in diesem Fall zweckmäßig eine C₁-C₂₀-Alkylenoxygrup-pe, C₁-C₂₀-α,ω)-Dioxoalkylengruppe, eine C₁-C₂₀ α,ω-Diaminoalkylengruppe, eine C₁-C₂₀ α,ω-Dicarboxyl-alkylengruppe, eine C₆-C₁₈-Dioxoarylengruppe, eine C₆-C₁₈ -Diaminoarylengruppe oder eine Dicarboxy-C₆-C₁₈ -arylengruppe eingesetzt werden.

Die Abstandsgruppe kann auch direkt an das Metallzentrum binden. Beispiele für geeignete Abstandsgruppen sind in diesem Zusammenhang:
- eine lineare, teilzyklische oder verzweigte aliphatische α,ω-difunktionate C₁-C₂₀-Alkylengruppe, insbesonders eine lineare, teilzyklische oder verzweigte aliphatische α,ω-difunktionale C₁-C₁₀-Alkylengruppe, wobei die beiden funktionellen Gruppen gleich oder verschieden sein können und in Form von OH, NR'H, COOH, SH, SO₃H, SO₂H, PO₃H, PO₂H, Si(OR')OO, Si(OR')₂O vorliegen. R' kann in diesem Fall alle oben für R² genannten Bedeutungen haben, und insbesondere in Form von N-Methylpropargylsäure vorliegen, wobei die jeweiligen funktionellen Gruppen formell in der deprotonierten Form (anionisch) vorliegen.
- eine difunktionale halogenierte oder nicht-halogenierte C₆-C₁₄ aromatische Gruppe, vorzugsweise eine difunktionale halogenierte oder nicht-halogenierte C₆-C₁₀ aromatische Gruppe, wobei die beiden funktionellen Gruppen gleich oder verschieden sein können und in Form von OH, NR'H, COOH, SH, SO₃H, SO₂H, PO₃H, PO₂H, Si(OR')OO, Si(OR')₂O vorliegen. R' kann in diesem Fall alle oben für R² genannten Bedeutungen haben, und insbesondere in Form von p-Aminophenol, p-Aminosulfonsäure, Perfluoroaminosulfonsäure vorliegen, wobei die jeweiligen funktionellen Gruppen formell in der deprotonierten Form (anionisch) vorliegen.

In einer alternativen Ausführungsform kann es sich bei dem festen Träger auch um einen anorganischen Träger, wie beispielsweise einen Träger auf Basis von Glas, Siliziumdioxid, Zirkonoxid oder Titandioxid handeln. Anorganische Träger haben den Vorteil in der Gegenwart von Lösemitteln nicht zu quellen und stellen somit druckstabile Trägermaterialien dar, welche wiederum für kontinuierliche heterogene Reaktionsführungen vorteilhaft eingesetzt werden können. In diesem Fall kann als Abstandsgruppe zweckmäßig eine Amino-, Hydroxy-, Carboxyl- oder Thionyl-Alkylen-Si(O)₃, eine Amino-, Hydroxy-, Carboxyl- oder Thionyl-Alkylen-SiR(O)₂-Gruppe oder eine Amino-, Hydroxy-, Carboxyl- oder Thionyl-Alkylen-SiRR'O-Gruppe eingesetzt werden, bei für die Reste R und R' die gleichen Substituenten in Betracht kommen, die für den Substituenten R² im Vorstehenden genannt sind.

Als bevorzugte Abstandsgruppen für anorganische Träger sind eine Alkyl-Si(O)₃, eine Alkyl-Aryl-SiR(O)₂- eine Diaryl-SiR(O)₂- oder eine OSi(O)₃-Gruppe zu nennen, bei der die Alkylgruppen lineare, teilzyklisch oder verzweigt C₁-C₁₈-Alkyl-, insbesondere C₁-C₇-Alkyl-, C₃-C₁₂-Cycloalkyl-, insbesondere C₃-C₆-Cycloalkyl- und die Arylgruppen un-, ein- oder mehrfach substituierte C₆-C₁₄-Aryl-Gruppen sein können, und wobei die Substituenten die für R² genannten Bedeutungen haben können
Die kovalente Anbindung des Rings B an den Träger kann unter Verwendung eines entsprechenden Vorläufers erfolgen, wie beispielsweise der protonierten Form des Rings B (der Ring wird am Carbenkohlenstoffatom protoniert) oder des Alkoxy- oder CO₂-geschützten Rings B, die sich mit Hilfe einer der in der Literatur beschriebenen Methoden (z.B. Adv. Synth. Catal. 2006, 348, 2101; Adv. Synth. Catal. 2010, 352, 917; Chem. Eur. J. 2013, 19, 11661; Adv. Synth. Catal. 2002, 344, 712; Macromol. Rapid. Commun. 2004, 25, 231) herstellen lassen. Das Carben im Ring B wird dann durch beispielsweise den Zusatz einer Base aus der protonierten Form des Rings B oder thermisch durch Abspaltung von beispielsweise CO₂ aus dem CO₂-geschützten Ring B generiert und mit Verbindungen der allgemeinen Formel M(≡CR¹)X¹X²·Lₓ in denen R¹, R², X¹ und X² die oben angegebenen Bedeutungen haben, L = ein neutraler Ligand ist und x einen Wert von 0 bis 2 annehmen kann, zur Reaktion gebracht. Die N-heterozyklischen Carbenkomplexe der Formeln I bis VI können in Abhängigkeit des Lösungsmittels und ihrer Zusammensetzung in der durch die Formeln I oder III bezeichneten neutral geladenen oder in der durch die Formeln IV bis VI bezeichneten ionischen Form vorliegen.

Schließlich ist es möglich, dass M im erfindungsgemäßen Komplex direkt über ein Schwefel- oder Sauerstoffatom an einen festen Träger gebunden ist, wobei eine Anbindung über ein Sauerstoffatom bevorzugt ist. In diesem Fall ist der Träger vorzugsweise ein anorganischer oxidischer Träger, besonders bevorzugt auf Basis von Siliziumdioxid. In diesem Fall ersetzt die Anbindung von M an den festen Träger einen der Substituenten X¹, X² und X³.

Ein weiterer Aspekt der vorliegenden Erfindung befasst sich, wie vorstehend bereits angedeutet, mit der Verwendung der erfindungsgemäßen Carbenkomplexe gemäß den Formeln I bis VI als Katalysator in Alkinmetathesereaktionen und für die Polymerisation von zyklischen Olefinen.

Bei diesen Alkinmetathesereaktionen kann es sich um alle über konventionelle Alkilidin-Carbenkomplexe katalysierbaren (asymmetrischen und desymmetrisierenden) Alkinmetathesereaktionen handeln, insbesondere um asymmetrische und desymmetrisierende Ringschlussmetathesen, Kreuzmetathesen und Ring öffnende Kreuzmetathesen. Alternativ können die angegebenen Carbenkomplexe auch für die Diinpolymerisation eingesetzt werden.

Als Substrate für diese Alkinmetathesereaktionen kommen prinzipiell alle Substrate in Betracht, die diesen Typen von Metathesereaktionen zugänglich sind. Beispielsweise können Alkine wie 1-Phenyl-1-propin, 1-Butin, 1-Pentin oder 1-Hexin mit den erfindungsgemäßen Carbenkatalysatoren umgesetzt werden. Zweckmäßig in eine Diinpolymerisation einzubeziehende Substrate sind beispielsweise 4,4,5,5-Tetrakis-(ethoxycarbonyl)-1,7-octadiin, 2,2-Di(prop-2-yn-1-yl)propan-1,3-diol, 1,7-Octadiin-4,5-dicarbonsäure, 1,6-Heptadiin-4-carbonsäure, oder 4,4-Dicyano-1,6-heptadiin.

Darüber hinaus können die beschriebenen Carbenkomplexe wie erwähnt für die Polymerisation von zyklischen Olefinen verwendet werden. Als zyklische Olefine geeignet sind in diesem Fall insbesondere Norborn-2-en, Cyclooctene, Cyclooctadiene, Cyclooctatetraene und/oder Cyclopentene. Die zyklischen Olefine könne dabei substituiert oder unsubstituiert sein.

Ein besonderer Vorteil der erfindungsgemäßen Carbenkomplexe gemäß den Formeln I bis VI besteht darin, dass diese in einigen Alkinmetathesereaktionen sehr hohe Wechselzahlen erlauben. Die Carbenkomplexe gemäß den Formeln I bis VI weisen zudem eine wünschenswert hohe Reaktivität bei der Polymerisation von Diinen auf. Gegenüber den bekannten Alkinmetathesekatalysatoren vermittelt der zusätzliche Carbenligand eine verbesserte Stabilität und/oder Reaktivität

Die Erfindung soll nachfolgend anhand von Beispielen näher erläutert werden. Vorangestellt sind einige allgemeine Betrachtungen:
Falls nicht anders angegeben wurden alle Reaktionsschritte in der Abwesenheit von Sauerstoff und Feuchtigkeit unter N₂ oder Ar entweder mittels Schlenktechnik oder in Schutzgasboxen (MBraun LabMaster 130) in trockener Glasausrüstung durchgeführt. Das deuterierte Lösungsmittel CD₂Cl₂ wurde über P₂O₅ getrocknet und Vakuum-transferiert, Benzol (C₆D₆) wurde über Na getrocknet und destilliert. Toluol, Diethylether, THF und CH₂Cl₂ wurden mittels eines Lösungsmittelreinigungssystems (SPS, MBraun) gereinigt. Kommerziell erhältliche Reagenzien wurden ohne weitere Aufreinigung verwendet.

Die NMR-Spektren wurden mit Hilfe eines Bruker 400-Spektrometers (400 MHz für Proton, 101 MHz für Kohlenstoff und 376 MHz für Fluor) bei 20°C aufgenommen, auf die internen Lösungsmittel Restsignale kalibriert. Die Verschiebungen der Signale und sind in ppm angegeben. Die Molmassen und -verteilungen wurden mittels Hochtemperaturgelpermeationschromatographie (HT-GPC) auf drei konsekutiven Waters Styragel HR4 4.6x300 mm-Säulen in Trichlorbenzol bei 145°C auf einem PSS HAT-GPC-System aufgenommen. Die Flussrate betrug 1 ml/min. Eng verteilte Polystyrolstandards im Bereich von 162 < Mₙ < 6035000 g·mol⁻¹ (Easi Vial-red, gelb und grün) von Polymer Laboratories kamen zur Anwendung.

Die im Folgenden beschriebenen Beispiele 1 bis 12 betreffen die Herstellung von Carbenkomplexen gemäß den Formeln I bis VI, während sich die weiteren Beispiele 13 bis 15 mit Alkinmetathesereaktionen und der Polymerisation von zyklischen Olefinen befassen.

### Beispiele

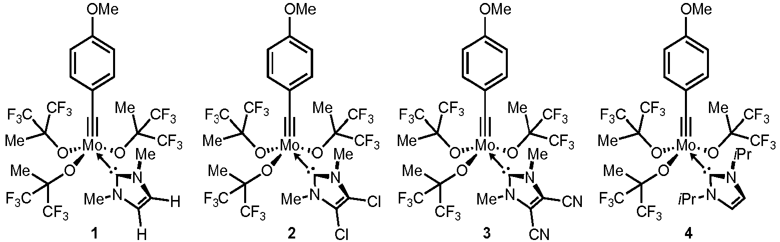

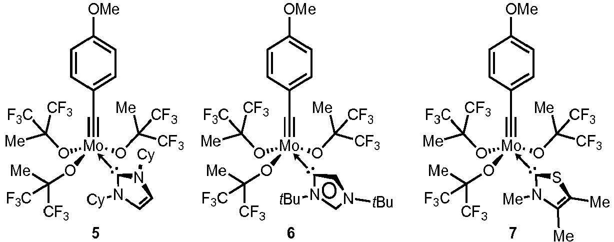

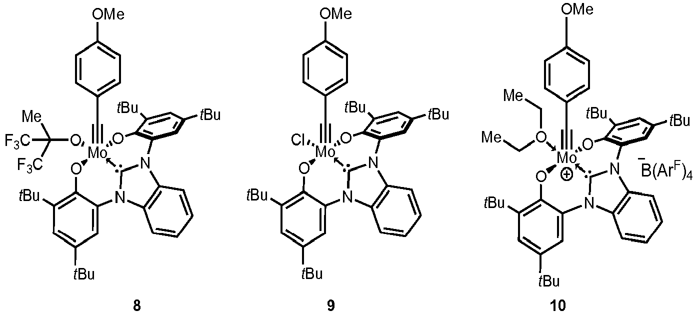

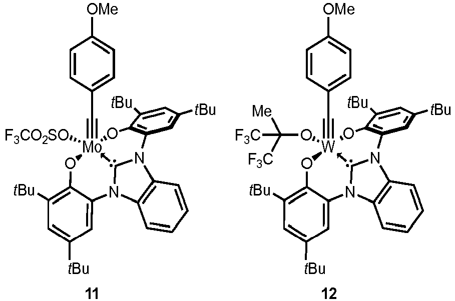

Struktur ausgewählter Mo-und W-Katalysatoren.

### Beispiel 1 (Herstellung von p-OMe-C₆H₄≡Mo(1,3-dimethylimidazol-2-yliden)(OCMe(CF₃)₂)₃ (1)):

In der Schutzgasbox wurde *p*-OMe-C₆H₄≡Mo(OCMe(CF₃)₂)₃·DME (654 mg, 0.77 mmol) in Toluol (3 mL) in einem Schlenkrohr vorgelegt. 1,3-Dimethylimidazol-2-yliden·AgI (306 mg, 0.93 mmol) wurde in Toluol (3 mL) dispergiert und zur Reaktionslösung getropft. Die Reaktionslösung wurde für 3 h in einem Ultraschallbad auf 40°C erwärmt. Während der Reaktion änderte sich die Farbe der Suspension von braun-rot zu intensivem rot. Flüchtige Bestandteile wurden im Vakuum entfernt. In der Schutzgasbox wurde das Reaktionsgemisch in Et₂O aufgenommen und filtriert. Die Reaktionslösung wurde eingeengt, mit Pentan überschichtet und bei -40°C über Nacht gelagert. Die Mutterlauge wurde dekantiert. Das Produkt wurde als roter Feststoff (471 mg, 0.55 mmol, 71%) isoliert. **¹H-NMR** (400 MHz, CD₂Cl₂): δ 7.30-7.26 (m, 2H), 6.93-6.90 (m, 2H), 6.85-6.81 (m, 2H), 3.85 (s, 3H), 3.81 (s, 3H), 3.56 (s, 3H), 1.69 (s, 3 H), 1.61 (s, 6H) ppm; **¹³C-NMR** (100 MHz, CD₂Cl₂): δ 297.1, 188.3, 160.5, 138.3, 132.6, 122.8,122.7, 124.59 (q, *J* = 289.97 Hz), 124.26 (q, *J* = 290.64 Hz), 124.11 (q, *J* = 288.56 Hz), 122.0, 121.1, 113.8, 83.4-82.2 (m), 55.8, 39.5, 36.7, 20.0, 19.7 ppm; **¹⁹F-NMR** (377 MHz, CD₂Cl₂): δ -77.91- -77.96 (m, 12F), -77.33- -77.41 (m, 6F) ppm; EA berechnet für C₂₅H₂₄F₁₈MoN₂O₄: C, 35.14; H, 2.83; N, 3.28. gefunden: 34.84; H, 2.99; N, 3.39.

### Beispiel 2 (Herstellung von p-OMe-C₆H₄≡Mo(4,5-dichlor-1,3-dimethylimidazol-2-yliden)(OCMe(CF₃)₂)₃ (2)):

In der Schutzgasbox wurde *p*-OMe-C₆H₄≡Mo(OCMe(CF₃)₂)₃·DME (90 mg, 0.106 mmol) in Toluol (3 mL) in einem Schlenkrohr vorgelegt. 4,5-Dichlor-1,3-dimethylimidazol-2-yliden·AgI (51 mg, 0.127 mmol) wurde in Toluol (3 mL) dispergiert und zur Reaktionslösung getropft. Die Reaktionslösung wurde für 3 h in einem Ultraschallbad auf 40°C erwärmt. Während der Reaktion änderte sich die Farbe der Suspension von braun-rot zu intensivem rot. Flüchtige Bestandteile wurden im Vakuum entfernt. In der Schutzgasbox wurde das Reaktionsgemisch in Et₂O aufgenommen und filtriert. Die Reaktionslösung wurde eingeengt, mit Pentan überschichtet und bei -40°C über Nacht gelagert. Die Mutterlauge wurde dekantiert. Das Produkt wurde als roter Feststoff (45 mg, 0.049 mmol, 46%) isoliert. **¹H-NMR** (400 MHz, CD₂Cl₂): δ 7.28-7.26 (m, 2H), 6.85-6.82 (m, 2H), 3.85 (s, 3H), 3.82 (s, 3H), 3.53 (s, 3H), 1.69 (s, 9H) ppm; **¹³C-NMR** (100 MHz, CD₂Cl₂): δ 298.2, 188.5, 160.8, 138.3, 132.7, 124.5 (q, *J* = 288.72 Hz), 124.2 (q, *J* = 290.72 Hz), 117.9, 116.9, 113.9, 84.0-82.4 (m), 55.9, 37.9, 34.9, 20.1, 19.8 ppm; **¹⁹F-NMR** (377 MHz, CD₂Cl₂): δ -76.96 (s, 6F), -77.47- -77.54 (m, 6F), - 77.60- -77.62 (m, 6F) ppm. **EA** berechnet: C₂₅H₂₂Cl₂F₁₈MoN₂O₄: C, 32.52; H, 2.40; N, 3.03. gefunden: C, 32.49; H, 2.47; N, 3.13.

### Beispiel 3 (Herstellung von p-OMe-C₆H₄≡Mo(4,5-dicyano-1,3-dimethylimidazol-2-yliden)(OCMe(CF₃)₂)₃ (3)):

In einer Schutzgasbox wurde *p*-OMe-C₆H₄≡Mo(OCMe(CF₃)₂)₃·DME (231 mg, 0.273 mmol) in Toluol (3 mL) in einem Schlenkrohr vorgelegt. 4,5-Dicyano-1,3-dimethylimidazol-2-yliden·AgI (125 mg, 0.328 mmol) wurde in Toluol (3 mL) dispergiert und zur Reaktionslösung getropft. Die Reaktionslösung wurde für 3 h in einem Ultraschallbad auf 40°C erwärmt. Während der Reaktion änderte sich die Farbe der Suspension von braun-rot zu intensivem rot. Flüchtige Bestandteile wurden im Vakuum entfernt. In der Schutzgasbox wurde das Reaktionsgemisch in Et₂O aufgenommen und filtriert. Die Reaktionslösung wurde eingeengt, mit Pentan überschichtet und bei -40°C über Nacht gelagert. Die Mutterlauge wurde dekantiert. Das Produkt wurde als roter Feststoff (126 mg, 0.139 mmol, 51%) isoliert. **¹H-NMR** (400 MHz, C₆D₆): δ 7.13-7.09 (m, 2H), 6.52-6.49 (m, 2H), 3.20 (s, 3H), 3.15 (s, 3H), 3.00 (s, 3H), 1.75 (s, 3 H), 1.64 (s, 6H) ppm; **¹³C-NMR** (100 MHz, CD₂Cl₂): δ 300.3, 196.4, 161.3, 138.1, 132.9, 124.3 (q, *J* = 289.08 Hz), 124.1 (q, *J* = 287.31 Hz), 115.6, 114,7. 114.2, 106.9, 106.4, 84.3-82.4 (m), 55.9, 39.7, 34.9, 37.1, 20.1, 19.8 ppm; **¹⁹F-NMR** (377 MHz, C₆D₆): δ -77.67 (s, 6F), -77.80- -77.88 (m, 6F), -78.24- -78.27 (m, 6F) ppm; **EA** berechnet: C₂₇H₂₂F₁₈MoN₄O₄: C, 35.86; H, 2.45; N, 6.19. gefunden: C, 35.73; H, 2.73; N, 5.89.

### Beispiel 4 (Herstellung von p-OMe-C₆H₄≡Mo(1,3-diisopropylimidazol-2-yliden)(OCMe(CF₃)₂)₃ (4)):

In der Schutzgasbox wurden *p*-OMe-C₆H₄≡Mo(OCMe(CF₃)₂)₃·DME (200 mg, 0.24 mmol) und 1,3-Diisopropylimidazol-2-yliden (36 mg, 0.24 mmol) jeweils in Toluol gelöst und für 20 min auf -40°C gekühlt. Die Lösung des 1,3-Diisopropylimidazol-2-ylidens wurde langsam zur Lösung von *p*-OMe-C₆H₄≡Mo(OCMe(CF₃)₂)₃·DME getropft, für 20 min auf RT erwärmt und für 3 h bei 40°C gerührt. Flüchtige Komponenten wurden im Vakuum entfernt. Durch Kristallisation aus Et₂O/Pentan bei -40°C wurde das Produkt als dunkelbraune Kristalle erhalten (149 mg, 0.164 mmol, 69%). **¹H-NMR** (400 MHz, C₆D₆): δ 7.35-7.33 (m, 2H), 6.54-6.52 (m, 2H), 6.21-6.20 (m, 2H), 5.36 (hept., *J* = 6.56 Hz, 1H), 4.17 (hept., *J* = 6.52 Hz, 1H), 3.19 (s, 3H), 1.90 (s, 3H), 1.74 (s, 6H), 1.05 (d, *J* = 6.60 Hz, 6H), 1.02 (d, *J* = 6.68 Hz, 6H) ppm; **¹³C-NMR** (100 MHz, CD₂Cl₂): δ 298.2, 186.1, 160.4, 138.2, 132.1, 124.68 (q, *J* = 288.64 Hz), 124.47 (q, *J* = 289.46 Hz), 124.32 (q, J = 290.22 Hz), 117.3, 116.6, 113.6, 83.5 (hept., *J* = 28.57 Hz), 82.91 (hept., *J* = 28.87 Hz), 55.8, 53.1, 52.9, 24.0, 23.13, 23.08, 20.0, 19.4 ppm; **¹⁹F-NMR** (377 MHz, C₆D₆): δ -76.12 - -76.19 (m, 6F), -76.30 - -76.34 (m, 6F), -76.87 (s, 6F) ppm; **EA** berechnet für C₂₉H₃₂F₁₈MoN₂O₄: C, 38.26; H, 3.54; N, 3.08 gefunden: C, 38,17; H, 3.60; N, 3.24.

### Beispiel 5 (Herstellung von p-OMe-C₆H₄≡Mo(1,3-dicyclohexylimidazol-2-yliden)(OCMe(CF₃)₂)₃ (5)):

In der Schutzgasbox wurde 1,3-Dicyclohexylimidazoliumtetrafluoroborat (35 mg, 0.11 mmol) in Toluol (2 mL) dispergiert und KHMDS (22 mg, 0.11 mmol) in Toluol (2 mL) gelöst und für 20 min auf -40°C gekühlt. Die Lösung des KHMDS wurde langsam zur Suspension des 1,3-Dicyclohexylimidazoliumtetrafluoroborats getropft. Das Reaktionsgemisch wurde für 1 h bei RT gerührt, währenddessen sich eine leicht gelbe Suspension bildete. Die Suspension wurde filtriert und die erhaltene Lösung auf -40°C gekühlt. Die gekühlte Lösung wurde langsam zu einer-40°C kalten Lösung von *p*-OMe-C₆H₄≡MO(OCMe(CF₃)₂)₃·DME (100 mg, 0.12 mmol) in Toluol (2 mL) in einem Schlenkrohr getropft. Die Reaktionsmischungen wurden für 10 min auf RT erwärmt und für 3 h bei 40°C gerührt. Flüchtige Komponenten wurden unter vermindertem Druck entfernt. Der rotbraune Feststoff wurde in Et₂O aufgenommen, filtriert und eingeengt. Das Produkt wurde durch Kristallisation aus Et₂O/Pentan bei -40°C als rotbrauner Feststoff (79 mg, 0.080 mmol, 67%) erhalten. **¹H-NMR** (400 MHz, C₆D₆): δ 7.42-7.40 (m, 2H), 6.56-6.54 (m, 2H), 6.37-6.36 (m, 2H), 5.01-4.95 (m, 1H), 3.86-3.81 (m, 1H), 3.17 (s, 3H), 2.29 (d, *J* = 11.80 Hz, 2H), 2.08 (d, *J* = 11.60 Hz, 2H), 1.88 (s, 3H), 1.73 (s, 6H), 1.68 (s, 2H), 1.51-1-13 (m, 14H) ppm; **¹³C-NMR** (100 MHz, CD₂Cl₂): δ 297.6, 186.2, 160.5, 138.1, 132.7, 124.68 (q, *J* = 288.95 Hz), 124.59 (q, *J* = 289.98 Hz), 124.40 (q, *J* = 290.25 Hz), 117.6, 117.2, 113.5, 83.5 (hept., *J* = 28.39 Hz), 82.79 (hept., *J* = 28.83 Hz), 61.2, 60.4, 55.8, 34.7, 33.7, 25.8, 25.7, 25.6, 19.8 ppm; **¹⁹F-NMR** (377 MHz, C₆D₆): δ -76.19 - -76.27 (m, 6F), -76.41 (s, 6F), -77.22 (s, 6F) ppm; **EA** berechnet für C₃₅H₄₀F₁₈MoN₂O₄: C, 42.44; H, 4.07; N, 2.83. gefunden: C, 42.12; H, 4.16; N, 2.83.

### Beispiel 6 (Herstellung von p-OMe-C₆H₄≡Mo(1H-1,3-di-tert-butylimidazol-5-yliden)(OCMe(CF₃)₂)₃ (6)):

In der Schutzgasbox wurden *p*-OMe-C₆H₄≡Mo(OCMe(CF₃)₂)₃·DME (200 mg, 0.24 mmol) und 1,3-Di-*tert*-butylimidazol-2-yliden (43 mg, 0.24 mmol) jeweils in Toluol gelöst und für 20 min auf -40°C gekühlt. Die Lösung des 1,3-Di-*tert*-butyl-imidazol-2-ylidens wurde langsam zur Lösung von *p*-OMe-C₆H₄≡Mo(OCMe(CF₃)₂)₃·DME getropft, für 20 min auf RT erwärmt und für 3 h bei 40°C gerührt. Danach wurde für 18 h bei RT gerührt. Flüchtige Komponenten wurden im Vakuum entfernt. Das Produkt wurde als rotbrauner Feststoff erhalten. Durch Kristallisation aus Et₂O/Pentan konnte das Produkt als roter Feststoff (98 mg, 0.104 mmol, 44%) erhalten werden. **¹H-NMR** (400 MHz, CDCl₃): δ 7.86 (d, *J* = 1.80 Hz, 1H), 7.19-7.16 (m, 2H), 7.09 (bs, 1H), 6.84-6.80 (m, 2H), 3.81 (s, 3H), 1.65 und 1.64 (2xs, 18H), 1.62 (s, 9H) ppm; **¹³C-NMR** (100 MHz, CD₂Cl₂): δ 292.2, 170.2, 159.8, 138.5, 131.6, 127.3, 126.1, 124.9 (q, *J* = 289.73 Hz), 124.4 (q, *J* = 290.98 Hz), 113.7, 83.37 (hept., *J* = 28.03 Hz), 81.7 (hept., *J* = 28.41 Hz), 60.2, 57.8, 55.7, 30.8, 30.2, 19.5, 19.3 ppm; **¹⁹F-NMR** (377 MHz, CDCl₃): δ -75.33 - -75.41 (m, 6F), -77.64 - -77.68 (m, 6F), -77.92 (s, 6F) ppm. **EA** berechnet: C₃₁H₃₆F₁₈MoN₂O₄: C, 39.65; H, 3.87; N, 2.98 gefunden: C, 39.66; H, 3.85; N, 3.07.

### Beispiel 7 (Herstellung von p-OMe-C₆H₄≡Mo(3,4,5-thiazol-2-yliden)(OCMe(CF₃)₂)₃ (7)):

In einem Schlenkrohr mit Rührfisch wurden 3,4,5-Trimethylthiazoliumiodid (100 mg, 0.118 mmol), Ag₂O (55 mg, 0.236 mmol), 4 Ä Molekularsieb (100 mg) und DCM (4 mL) vorgelegt. Das Reaktionsgemisch wurde unter Lichtausschluss für 1 h bei RT gerührt. Das Lösungsmittel wurde unter vermindertem Druck entfernt. *p-*OMe-C₆H₄≡Mo(OCMe(CF₃)₂)₃·DME (333 mg, 0.393 mmol) in Toluol (6 mL) wurde zugegeben. Das Reaktionsgefäß wurde ausgeschleust und 2 h im Ultraschallbad auf 40°C erhitzt. Das Reaktionsgemisch wurde in die Schutzgasbox eingeschleust und filtriert. Flüchtige Komponenten wurden unter vermindertem Druck entfernt. Der rotbraune Feststoff wurde in Et₂O aufgenommen und mit Pentan überschichtet und über Nacht bei -40°C gelagert. Das Produkt wurde als dunkelroter Feststoff (175 mg, 0.198 mmol, 50%) erhalten. **¹H-NMR** (400 MHz, CD₂Cl₂): δ 7.31-7.29 (m, 2H), 6.87-6.82 (m, 2H), 3.82 (s, 3H), 3.69 (s, 3H), 2.35 (s, 3H), 2.29 (s, 3H), 1.72 (s, 3H), 1.62 (s, 6H) ppm; **¹³C-NMR** (100 MHz, CD₂Cl₂): δ 300.7, 209.0, 160.6, 140.2, 138.4, 133.0, 132.5, 124.65 (q, *J* = 289.70 Hz), 124.28 (q, J = 289.97 Hz), 124.08 (q, *J* = 289.83 Hz), 113.7, 83.8-82.7 (m), 55.8, 40.6, 20.0, 19.7, 12.2, 12.0 ppm; **¹⁹F-NMR** (377 MHz, CD₂Cl₂): δ -76.66 - - 76.77 (m, 12F), -77.16 - -77.18 (m, 6F) ppm; **EA** berechnet für C₂₆H₂₅F₁₈MoNO₄S: C, 35.27; H, 2.85; N, 1.58 gefunden: C, 35.08; H, 3.09; N, 1.59.

### Beispiel 8 (Herstellung von p-OMe-C₆H₄≡Mo(1,3-bis(3,5-di-tert-butyl-2-hydroxyphenyl)-1H-benzo[d]imidazol-2-ylid-en)(OCMe(CF₃)₂) (8)):

1,3-Bis(3,5-di-*tert*-butyl-2-hydroxyphenyl)-1*H*-benzo[*d*]imidazol-3-iumchlorid (304 mg, 541 µmol) wurde in Toluol (2 mL) dispergiert. KHMDS (108 mg, 541 µmol) wurde in Toluol (2 mL) gelöst. Beide Lösungen wurden auf -40°C gekühlt. Die KHMDS-Lösung wurde langsam zur Suspension des 1,3-Bis(3,5-di-*tert*-butyl-2-hydroxyphenyl)-1*H*-benzo[*d*]imidazol-3-iumchlorids getropft. Es war eine schnelle Gelbverfärbung erkennbar. Es wurde für 1 h gerührt, währenddessen sich eine homogene Lösung bildete. Die Lösung wurde auf -40°C gekühlt. *p*-OMe-C₆H₄≡Mo(OCMe(CF₃)₂)₃·DME (437 mg, 515 µmol) wurde in Toluol (6 mL) vorgelegt und auf -40°C gekühlt. Beide Lösungen wurden in einem Schlenkrohr zusammengegeben und für 3 h bei Raumtemperatur gerührt. Flüchtige Komponenten wurden im Vakuum entfernt. Der erhaltene intensiv rote Feststoff wurde mit Pentan extrahiert. Pentan wurde im Vakuum entfernt. Der erhaltene rote Feststoff wurde aus wenig Pentan kristallisiert. Das Produkt wurde als violetter Feststoff (205 mg, 0.309 mmol, 60%) erhalten. **¹H-NMR** (400 MHz, C₆D₆): δ 7.87-7.84 (m, 2H), 7.67-7.64 (m, 2H), 7.00-6.98 (m, 2H), 6.50-6.48 (m, 2H), 6.09-6.07 (m, 2H), 2.90 (s, 3H), 2.14 (s, 3H), 1.86 (s, 18H), 1.33 (s, 18H) ppm; **¹³C-NMR** (100 MHz, C₆D₆): δ 323.2, 207.9, 160.0, 156.4, 141.2, 140.1, 139.1, 134.9, 131.6, 125.6, 125.3 (q, *J* = 289.83 Hz), 124.2, 122.5, 116.3, 113.7, 113.1, 83.4 (hept, *J* = 28.64 Hz)*, 54.6, 36.4, 34.7, 31.8, 30.3, 21.1 ppm; **¹⁹F-NMR** (377 MHz, C₆D₆): δ -76.21 (s) ppm; **EA** berechnet für C₄₇H₅₄F₆MoN₂O₄: C, 61.30; H, 5.91; N, 3.04. gefunden: C, 61.53; H, 6.01; N, 2.96.

### Beispiel 9 (Herstellung von p-OMe-C₆H₄≡Mo(1,3-bis(3,5-di-tert-butyl-2-hydroxyphenyl)-1H-benzo[d]imidazol-2-yliden)Cl (9)):

In der Schutzgasbox wurden *p*-OMe-C₆H₄≡Mo(1,3-bis(3,5-di-*tert*-butyl-2-hydroxyphenyl)-1*H*-benzo[*d*]imidazol-2-ylid-en)(OCMe(CF₃)₂) (138 mg, 0.15 mmol) und N,N-Dimethylanilinium-hydrochlorid (22 mg, 0.14 mmol) in DCM (jeweils 2 mL) vorgelegt und auf -40°C gekühlt. *p*-OMe-C₆H₄≡Mo(1,3-bis(3,5-di-*tert*-butyl-2-hydroxyphenyl)-1*H*-benzo[*d*]imidazol-2-ylid-en)(OCMe(CF₃)₂) in DCM (intensiv rot) wurde langsam zur Lösung des N,N-Dimethylaniliniumhydrochlorids getropft. Es war eine rasche Violettfärbung zu beobachten. Das Reaktionsgemisch wurde für 1 h bei RT gerührt. Flüchtige Komponenten wurden im Vakuum entfernt. Es wurde DCM (2 mL) zugegeben und unter vermindertem Druck entfernt. Der erhaltene Feststoff wurde in wenig DCM aufgenommen und mit Pentan gefällt. Die Lösung wurde dekantiert und der violette Feststoff wurde mit Pentan gewaschen. Das Produkt wurde als violetter Feststoff (99 mg, 0.13 mmol, 93%) erhalten. **¹H-NMR** (400 MHz, C₆D₆): δ 7.85-7.81 (m, 2H), 7.67-7.63 (m, 4H), 7.00-6.97 (m, 2H), 6.40-6.37 (m, 2H), 6.09-6.05 (m, 2H), 2.89 (s, 3H), 1.88 (s, 18H), 1.32 (s, 18H) ppm; **¹³C-NMR** (100 MHz, C₆D₆): δ 330.5, 206.6, 160.4, 156.9, 141.9, 140.1, 139.2, 134.7, 132.0, 124.8, 124.4, 122.6, 115.9, 113.6, 113.1, 54.6, 36.4, 34.8, 31.8, 30.4 ppm; **EA** berechnet für C₄₃H₅₁ClMoN₂O₃: C, 66.62 H, 6.63; N, 3.61. gefunden: C, 66.44; H, 6.76; N, 3.62.

### Beispiel 10 (Herstellung von p-OMe-C₆H₄≡Mo(1,3-bis(3,5-di-tert-butyl-2-hydroxyphenyl)-1H-benzo[d]imidazol-2-yliden) B(Ar^{F})₄ (10)):

In einer Schutzgasbox wurden *p*-OMe-C₆H₄≡Mo(1,3-bis(3,5-di-*tert*-butyl-2-hydroxyphenyl)-1*H*-benzo[d]imidazol-2-yliden)Cl (42 mg, 0.054 mmol) in Dichlorethan (2 mL) und NaB(Ar^{F})₄ (48 mg, 0.054 mmol) in Et₂O (2 mL) vorgelegt und auf -40°C gekühlt. Die NaB(Ar^{F})₄-Lösung wurde langsam zur Lösung von *p*-OMe-C₆H₄≡Mo(1,3-bis(3,5-di-*tert*-butyl-2-hydroxyphenyl)-1*H*-benzo[d]imidazol-2-yliden)Cl getropft. Das Reaktionsgemisch wurde für 30 min bei RT gerührt. Das Reaktionsgemisch wurde filtriert und im Vakuum eingeengt. Durch Kristallisation aus Et₂O/Pentan bei -40°C wurde das Produkt als violetter Feststoff (73 mg, 0.040 mmol, 74%) erhalten. Im Feststoff sind nach Kristallisation drei Äquivalente Et₂O gebunden. **¹H-NMR** (400 MHz, CD₂Cl₂): δ 8.14-8.12 (m, 2H), 7.89-7.88 (m, 2H), 7.74-7.73 (m, 8H), 7.62-7.56 (m, 8H), 6.46-6.44 (m, 2H), 6.28-6.25 (m, 2H), 4.76 (q, 4H, *J* = 7.14 Hz), 3.62 (s, 3H), 1.66 (t, 6H, *J* = 7.12 Hz), 1.65 (s, 18H), 1.45 (s, 18H) ppm; **¹³C-NMR** (100 MHz, C₂D₄Cl₂): 334.43, 201.64, 162.87, 162.40, 162.37, 161.88, 161.38, 155.55, 144.87, 138.22, 137.93, 135.14, 134.65, 133.30, 129.59, 129.29, 128.97, 128.92, 128.64, 126.26, 126.03, 124.50, 123.68, 123.56, 120.85, 117.80, 117.77, 117.72, 117.68, 117.64, 116.94, 114.10, 113.52, 77.44, 55.62, 36.11, 35.07, 31.49, 30.24, 14.73. ppm; **¹⁹F-NMR** (377 MHz, CD₂Cl₂): δ -62.86 (s) ppm. **EA** berechnet für C₈₇H₉₃BF₂₄MoN₂O₆ (Komplex mit drei Äquivalenten Et₂O): C, 57.24 H, 5.14; N, 1.53. gefunden: C, 57.29; H, 5.20; N, 1.72.

### Beispiel 11 (Herstellung von p-OMe-C₆H₄≡Mo(1,3-bis(3,5-di-tert-butyl-2-hydroxyphenyl)-lH-benzo[d]imidazol-2-ylid-en)(OSO₂CF₃)(11)):

*p*-OMe-C₆H₄≡Mo(1,3-bis(3,5-di-*tert*-butyl-2-hydroxyphenyl)-1*H*-benzo[d]imidazol-2-yliden)Cl (35 mg, 0.045 mmol) wurde in Dichlormethan vorgelegt (1 mL) und AgOTf (11 mg, 0.045 mmol) wurden in Dichlormethan/Et₂O (3:1, jeweils etwa 1 mL) vorgelegt. Die Lösung von AgOTf wurde zur Lösung von *p*-OMe-C₆H₄≡Mo(1,3-bis(3,5-di-*tert*-butyl-2-hydroxyphenyl)-1*H*-benzo[d]imidazol-2-yliden)Cl gegeben. Es war eine Braunverfärbung und das Ausfällen eines farblosen Niederschlags zu erkennen. Das Reaktionsgemisch wurde für 30 min bei RT gerührt und anschließend filtriert. Die Reaktionslösung wurde eingeengt. Das Produkt wurde als brauner Feststoff erhalten (36 mg, 0.041 mmol, 91%). **¹H-NMR** (400 MHz, CD₂Cl₂): δ 8.14-8.06 (m, 2H), 7.81 (d, *J* = 2.3 Hz, 2H), 7.56 (dd, *J₁* = 6.3, *J₂* = 3.2 Hz, 2H), 7.54 (d, *J* = 2.3 Hz, 2H), 6.42-6.37 (m, 2H), 6.24-6.18 (m, 2H), 3.61 (s, 3H), 1.62 (s, 18H), 1.43 (s, 18H) ppm; **¹⁹F-NMR** (377 MHz, CD₂Cl₂): δ -76.80 (s) ppm.

### Beispiel 12 (Herstellung von p-OMe-C₆H₄≡W(1,3-bis(3,5-di-tert-butyl-2-hydroxyphenyl)-1H-benzo[d]imidazol-2-ylid-en)(OCMe(CF₃)₂) (12)):

1,3-Bis(3,5-di-*tert*-butyl-2-hydroxyphenyl)-1*H*-benzo[*d*]imidazol-3-iumchlorid (60.7 mg, 0.108 mmol) wurde in Toluol (2 mL) dispergiert. KHMDS (21.5 mg, 0.108 mmol) wurde in Toluol (2 mL) gelöst. Beide Lösungen wurden auf -40°C gekühlt. Die KHMDS-Lösung wurde langsam zur Suspension des 1,3-Bis(3,5-di-*tert*-butyl-2-hydroxyphenyl)-1*H*-benzo[*d*]imidazol-3-iumchlorids getropft. Eine Gelbverfärbung war zu beobachten. Es wurde für 1 h gerührt, währenddessen sich eine homogene Lösung bildete. Die Lösung wurde auf -40°C gekühlt. *p*-OMe-C₆H₄≡W(OCMe(CF₃)₂)₃·DME (96 mg, 0.103 mmol) wurde in Toluol (6 mL) vorgelegt und auf -40°C gekühlt. Beide Lösungen wurden in einem Schlenkrohr zusammengegeben und für 3 h bei Raumtemperatur gerührt. Flüchtige Komponenten wurden im Vakuum entfernt. Der erhaltene dunkelbraune Feststoff wurde mit Pentan (10 x 2 mL) extrahiert. Pentan wurde im Vakuum entfernt. Der erhaltene braune Feststoff wurde mehrfach aus Pentan und Pentan/Toluol kristallisiert. Das Produkt wurde als orangener Feststoff (16 mg, 0.016 mmol, 16%) erhalten. **¹H-NMR** (400 MHz, C₆D₆): δ 7.86-7.84 (m, 2H), 7.66 (s, 4H), 7.00-6.98 (m, 2H), 6.38-6.6.36 (m, 2H), 6.29-6.27 (m, 2H), 2.98 (s, 3H), 2.11 (s, 3H), 1.85 (s, 18H), 1.33 (s, 18H) ppm; **¹³C-NMR** (100 MHz, C₆D₆): δ 311.5, 213.7, 159.8, 155.6, 141.6, 140.4, 134.9, 134.8, 126.5, 124.7,124.2, 122.4, 116.2, 113.7, 112.4, 83.6, 54.5, 36.3, 34.7, 31.7, 30.4 ppm; **¹⁹F-NMR** (377 MHz, C₆D₆): δ -76.11 (s) ppm.

### Beispiel 13: Zeit-Umsatz-Diagramme von 1 bis 7 für eine Beladung von Katalysator:Substrat = 1:100

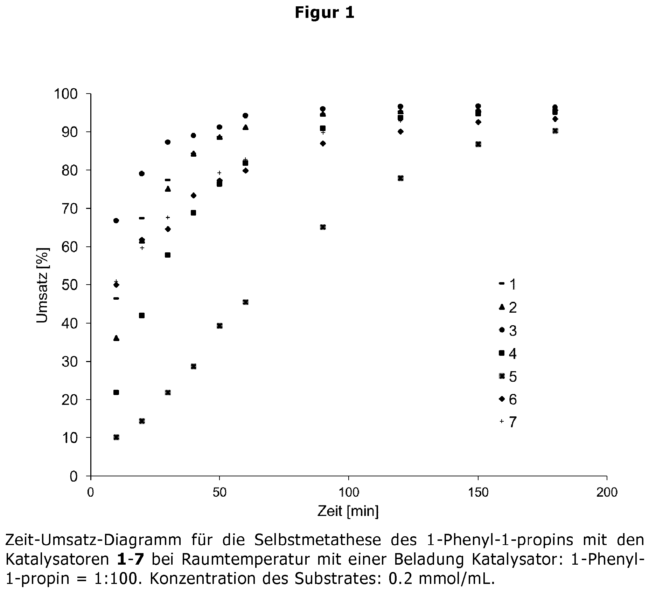

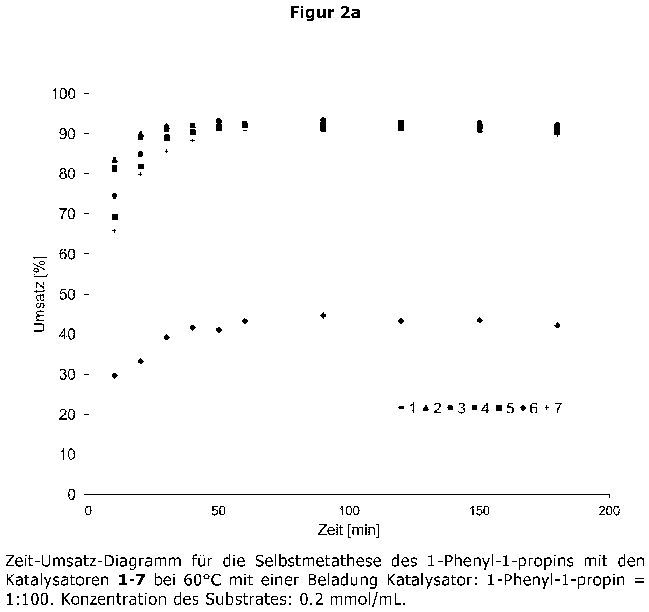

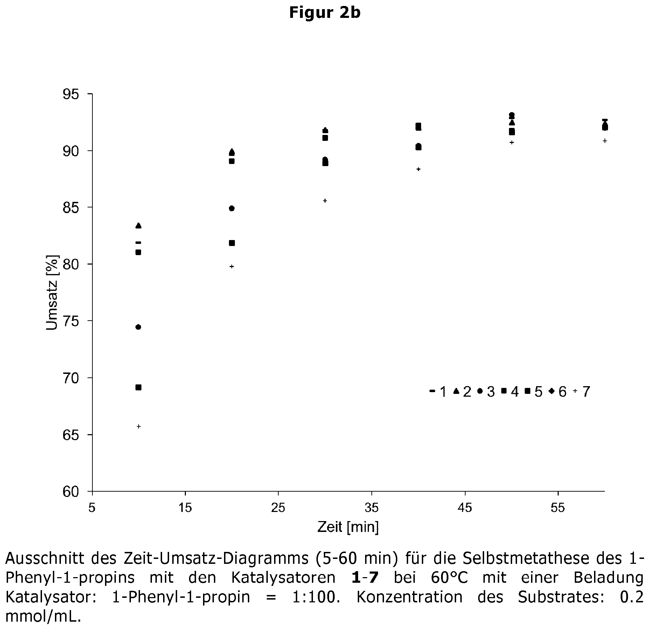

In einem 5 mL Schraubdeckelglas wurden gepulvertes 5 Ä Molsieb (250 mg), 1-Phenyl-l-propin (31.3 µL, 0.25 mmol) und Dodecan (25 µL) in Toluol (1 mL) vorgelegt. Eine Nullprobe (etwa 0.05 mL) wurde entnommen. Es wurde eine Stammlösung des entsprechenden Katalysators in Toluol hergestellt (etwa 20 mg Katalysator wurden eingewogen, es wurde die entsprechende Menge Lösungsmittel zugegeben um eine Konzentration von 0.001 mmol/mL zu erhalten). 0.25 mL dieser Stammlösung (entsprechend 0.0025 mmol Katalysator) wurde zum Reaktionsgemisch gegeben. Nach 10 min wurde die erste Probe (etwa 0.05 mL) entnommen. Weitere Proben wurden nach definierten Zeiträumen entnommen. Die Reaktionen wurden jeweils bei Raumtemperatur und bei 60°C durchgeführt. Die Analyse erfolgte durch GC-MS-Analyse in Aceton. Die Ergebnisse der jeweiligen Umsetzungen sind für 23°C (Raumtemperatur) und 60°C in den Figuren 1 (23°C) und 2a/2b (60°C) dargestellt. Figur 2b ist eine Ausschnittsvergrößerung des Bereichs von 60 bis 95% Umsatz aus Figur 2a für den Zeitraum von 5 bis 58 Min. Die katalytische Produktivität (TON) der Umsetzungen bei 10, 30, 60, 90 und 180 Min für Raumtemperatur und 60°C sind zudem in Tabelle 1 angegeben. Die sich daraus ergebenden Wechselzahlen (TOF) für die Umsetzungen bei 10 und 30 Min sind in Tabelle 2 dargestellt.

**Tabelle 1: Katalytische Produktivität (turnover number, TON) für die Katalysatoren 1-7 zu ausgewählten Zeiten bei Raumtemperatur und 60°C mit einer Beladung Katalysator: 1-Phenyl-1-propin = 1:100.**

| **Eintrag (23°C)** | **Zeit [min]** | **1** | **2** | **3** | **4** | **5** | **6** | **7** |
|---|---|---|---|---|---|---|---|---|
| 1 | 10 | 46 | 36 | 67 | 22 | 10 | 50 | 51 |
| 2 | 30 | 77 | 75 | 87 | 58 | 22 | 65 | 68 |
| 3 | 60 | 91 | 91 | 94 | 82 | 46 | 80 | 83 |
| 4 | 90 | 95 | 95 | 96 | 91 | 65 | 87 | 90 |
| 5 | 180 | 96 | 96 | 96 | 95 | 90 | 93 | 95 |
| | | | | | | | | |

| **Eintrag (60°C)** | **Zeit [min]** | **1** | **2** | **3** | **4** | **5** | **6** | **7** |
|---|---|---|---|---|---|---|---|---|
| 1 | 10 | 82 | 83 | 74 | 81 | 69 | 30 | 66 |
| 2 | 30 | 92 | 92 | 89 | 91 | 89 | 39 | 86 |
| 3 | 60 | 93 | 92 | 92 | 92 | 92 | 43 | 91 |
| 4 | 90 | 93 | 92 | 93 | 92 | 91 | 45 | 92 |

**Tabelle 2: Wechselzahlen (turnover frequency, TOF) für die Katalysatoren 1-7 nach 10 und 30 Minuten bei Raumtemperatur und 60°C mit einer Beladung Katalysator: 1-Phenyl-1-propin = 1:100.**

| **Eintrag** | **Katalysato** r | **Wechselzahl bei 10 min [min⁻¹**] | | **Wechselzahl bei 30 min [min⁻¹**] | |
|---|---|---|---|---|---|
| | | **23°C** | **60°C** | **23°C** | **60°C** |
| 1 | **1** | 4.6 | 8.2 | 2.6 | 3.1 |
| 2 | **2** | 3.6 | 8.3 | 2.5 | 3.1 |
| 3 | **3** | 6.7 | 7.4 | 2.9 | 3.0 |
| 4 | **4** | 2.2 | 8.1 | 1.9 | 3.0 |
| 5 | **5** | 1.0 | 6.9 | 0.7 | 3.0 |
| 6 | **6** | 5.0 | 3.0 | 2.2 | 1.3 |
| 7 | **7** | 5.1 | 6.6 | 2.3 | 2.9 |

### Beispiel 14: Zeit-Umsatz-Diagramme von 1 für eine Beladung von Katalysator: 1-Phenyl-l-propin = 1:1000

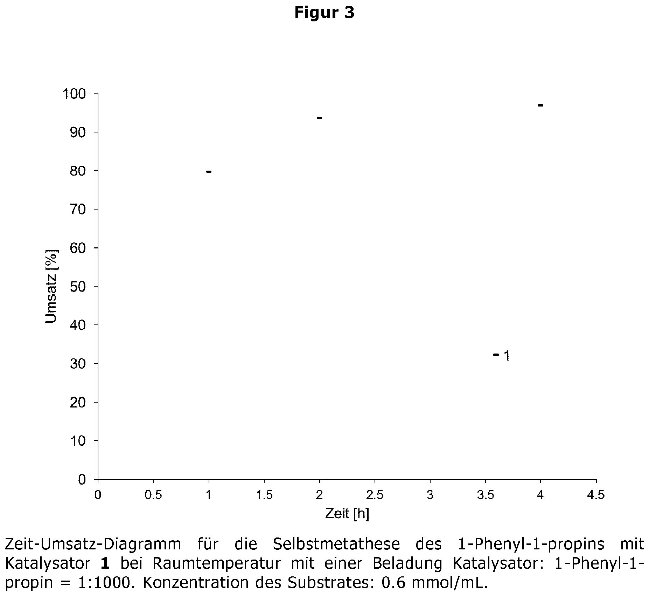

In einem 5 mL Schraubdeckelglas wurden gepulvertes 5 Ä Molsieb (250 mg), 1-Phenyl-l-propin (31.3 µL, 0.25 mmol) und Dodecan (25 µL) in Toluol (340 µL) vorgelegt. Eine Nullprobe (etwa 0.05 mL) wurde entnommen. Es wurde eine Stammlösung des entsprechenden Katalysators in Toluol hergestellt (etwa 20 mg Katalysator wurden eingewogen, es wurde die entsprechende Menge Lösungsmittel zugegeben um eine Konzentration von 0.0259 mol/mL zu erhalten). 80 µL dieser Stammlösung (entsprechend 0.00025 mmol Katalysator) wurde zum Reaktionsgemisch gegeben. Nach 1 h, 2 h und 4 h wurden Proben (etwa 0.05 mL) entnommen. Die Analyse erfolgte durch GC-MS-Analyse in Aceton. Die Ergebnisse der Umsetzungen sind für 23°C (Raumtemperatur) in Figur 3 dargestellt. Die katalytische Produktivität (TON) der Umsetzungen bei 1, 2 und 4 h sind zudem in Tabelle 3 angegeben.

**Tabelle 3: Katalytische Produktivität (turnover number, TON) für Katalysator 1 bei Raumtemperatur mit einer Beladung Katalysator: 1-Phenyl-1-propin = 1:1000.**

| **Eintrag** | **Zeit [h]** | **TON** |
|---|---|---|
| 1 | 1 | 800* |
| 2 | 2 | 940 |
| 3 | 4 | 970 |

| | | |
|---|---|---|
| *Dies entspricht einer Wechselzahl (turnover frequency, TOF) von 13.3 min⁻¹. | | |

### Beispiel 15: Polymerisation zyklischer Olefine

Für die nachfolgenden Untersuchungen wurden die Monomere **11** und **12** verwendet:

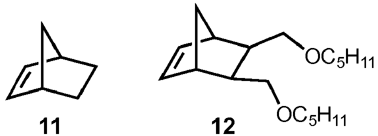

Die Polymerisationen wurden wie folgt durchgeführt:
**11** (50 mg, 0.53 mmol) und **1** (4.5 mg, 5.3 µmol) wurden in 1,2-Dichlorethan (2 mL) in einem 5 mL Schraubdeckelglas vorgelegt und für 18 h bei RT und 80°C gerührt. Das Ausfallen des Polymers war schon während der Reaktion zu beobachten. Die Reaktionslösung wurde in Methanol gefällt. Die Mutterlauge wurde dekantiert und das erhaltene Polymer wurde bei 50°C für 4 h unter vermindertem Druck getrocknet. Die Polymere wurden in als farblose Feststoffe in Ausbeuten >90% erhalten.
**12** (50 mg, 0.170 mmol) und **1** (3.6 mg, 4.25 µmol) wurden in 1,2-Dichlorethan (2 mL) in einem 5 mL Schraubdeckelglas vorgelegt und für 6 h bei 80°C gerührt. Die Reaktionslösung wurde in Methanol gefällt. Die Mutterlauge wurde dekantiert und das erhaltene Polymer wurde bei 50°C für 4 h unter vermindertem Druck getrocknet. Das Polymer wurde als farbloser Feststoff erhalten (32 mg, 64%). **¹H-NMR** (400 MHz, CDCl₃): δ 5.29-5.18 (2xbs, 2H), 3.39-3.34 (m, 8H), 2.70 (bs, 2H), 2.00 (bs, 3H), 1.55 (bs, 4H), 1.32 (bs, 8H), 0.90 (bs, 6H) ppm; **¹³C-NMR** (100 MHz, CDCl₃): δ 134.1, 71.2, 71.1, 70.8, 70.4, 48.1, 47.8, 46.9, 41.2, 40.0, 29.7, 28.7, 22.7, 14.2 ppm; *Mₙ* = 530 000 g/mol; PDI = 1.45.

### Beispiel 16: Herstellung eines an einem festen Träger immobilisierten Katalysators

### Synthese von 4-(((tert-Butyldimethylsilyl)oxy)methyl)-1H -Imidazol (L1):

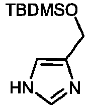

Zu einer Suspension von 4-(Hydroxymethyl)-1H-imidazol (2.00 g, 20.4 mmol) und Triethylamin (2.80 mL, 20.4 mmol) in Methylenchlorid (150 mL) wurde tert-Butyldimethylsilylchlorid (2.92 g, 19.4 mmol) zugegeben und für 18 h bei Raumtemperatur gerührt. Alle flüchtigen Komponenten wurden unter vermindertem Druck entfernt. Der entstehende Feststoff wurde in Diethylether aufgenommen und über Celite filtriert. Alle flüchtigen Komponenten wurden unter vermindertem Druck entfernt um das Produkt als weißen Feststoff zu erhalten (4.02 g, 18.9 mmol, 98%): **¹H-NMR** (400 MHz, CDCl₃) δ = 7.59 (d, 4JH-H = 1.1 Hz, NCHN 1H), 6.94 (d, 4JH-H = 1.0 Hz, NCHC 1H), 4.73 (d, 4JH-H = 0.8 Hz, CH2, 2H), 0.90 (s, tBu, 9H), 0.08 (s, Me, 6H).

### Synthese von 4-(((tert-Butyldimethylsilyl)oxy)methyl)-1,3-diisopropyl-1H-imidazoliumiodid (L2):

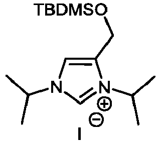

**L1** (4.00 g, 18.9 mmol) wurde in Tetrahydrofuran (200 mL) gelöst und auf -30 °C gekühlt. Zu dieser Lösung wurde langsam NaH (0.68 g, 28.4 mmol) gegeben und 3 h bei Raumtemperatur gerührt. Das Reaktionsgemisch wurde über Celite filtriert und zum Filtrat wurde 2-Iodopropan (8.00 mL, 80.0 mmol) zugegeben und 80 h refluxiert. Alle flüchtigen Komponenten wurden unter vermindertem Druck entfernt, der Rückstand in Chloroform gelöst und über Celite filtriert. Alle flüchtigen Komponenten wurden unter vermindertem Druck entfernt und der Rückstand wurde mittels Säulenchromatographie (Silika, Chloroform:Methanol 95:5) aufgereinigt, um das Produkt als weißen Feststoff zu erhalten (1.48 g, 2.7 mmol, 14%): **¹H-NMR** (400 MHz, CDCl₃) *δ* = 10.30 (d, ⁴*J*_{H-H} = 1.7 Hz, NC*H*N 1H), 7.43 (d, ⁴*J*_{H-H} = 1.6 Hz, NC*H*C 1H), 5.06 (sept, ³*J*_{H-H} = 6.7 Hz, *ⁱ*Pr, 1H), 4.78 - 4.60 (m, *ⁱ*Pr, CH₂, 3H), 1.69 (d, ³*J*_{H-H} = 6.8 Hz, *ⁱ*Pr, 6H), 1.60 (d, ³*J*_{H-H} = 6.7 Hz, *ⁱ*Pr, 6H), 0.86 (s, *ⁱ*Pr, 9H), 0.10 (s, Me, 6H) ppm; **¹³C-NMR** (101 MHz, CDCl₃) *δ* = 135.2 (C_{Imidazolium}), 133.3 (C_{Imidazolium}), 117.4 (C_{Imidazolium}), 54.8 (*ⁱ*Pr), 53.4 (*ⁱ*Pr), 51.8 (CH₂), 25.7 (*^{t}*Bu), 23.7 (*ⁱ*Pr), 23.4 (*ⁱ*Pr), 18.2 (*^{t}*Bu), -5.3 (Me) ppm; Elementaranalyse berechnet für C₁₆H₃₃IN₂OSi: C, 45.28; H, 7.84; N, 6.60. gefunden: C, 45.07; H 8.01; N, 6.70.

### Synthese von 4-(((tert-Butyldimethylsilyl)oxy)methyl)-1,3-diisopropyl-1H-imidazolium tetrafluoroborat (L3):

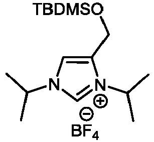

**L2** (1.10 g, 2.59 mmol) wurde in Methylenchlorid gelöst und zusammen mit einer Lösung aus Natriumtetrafluoroborat (0.34 g, 3.11 mmol) in demineralisiertem Wasser für 18 h bei Raumtemperatur gerührt. Die organische Phase wurde abgetrennt, über Natriumsulfat getrocknet, filtriert und alle flüchtigen Komponenten wurden unter vermindertem Druck entfernt. Das Produkt wurde als farbloser Feststoff erhalten (0.74 g, 1.93 mmol, 75%): **¹H-NMR** (400 MHz, CDCl₃) δ = 9.51 (d, ⁴*J*_{H-H} = 1.7 Hz, NC*H*N, 1H), 7.39 (d, ⁴*J*_{H-H} = 1.6 Hz, NC*H*C 1H), 4.87 (hept, ³*J*_{H-H} = 6.7 Hz, *ⁱ*Pr, 1H), 4.75 - 4.62 (m, CH₂, *ⁱ*Pr, 3H), 1.64 (d, ³*J*_{H-H} = 6.8 Hz, *ⁱ*Pr, 6H), 1.57 (d, ³*J*_{H-H} = 6.7 Hz, *ⁱ*Pr, 6H), 0.87 (s, *^{t}*Bu, 9H), 0.10 (s, Me, 6H) ppm; **¹⁹F-NMR** (376 MHz, CDCl₃) δ = -151.06 , -151.12 ppm; **¹³C-NMR** (101 MHz, CDCl₃) δ = 134.3 (C_{Imidazolium}), 133.6 (C_{Imidazolium}), 117.5 (C_{Imidazolium}), 54.7 (*ⁱ*Pr), 53.5 (*ⁱ*Pr), 51.7 (CH₂), 25.8 (*^{t}*Bu), 23.2 (*ⁱ*Pr), 23.1 (*ⁱ*Pr), 18.2 (*^{t}*Bu), -5.4 (Me) ppm; **HRMS** (ESI) berechnet für C₁₆H₃₃N₂OSi⁺: 297.24; gefunden: 297.24.

### Synthese der Molybdän-Vorläufer:

Die Molybdän-Vorläufer wurden nach literaturbekanntem Syntheseweg hergestellt (J. Heppekausen, R. Stade, A. Kondoh, G. Seidel, R. Goddard, A. Fürstner, Chem. Eur. J. 2012, 18, 10281-10299).

### Synthese von [NMe4][Mo(CO)5(COC6H4OMe)] (P1):

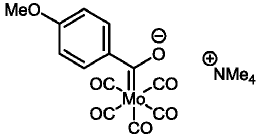

Zu einer Lösung von 4-Iodoanisol (4.43 g, 18.9 mmol) in Diethylether (70 mL) wurde bei -78 °C *n*-BuLi (1.6 M, 11.9 mL, 18.9 mmol) langsam zugegeben und 20 min bei dieser Temperatur gerührt. Danach wurde die Lösung auf 0 °C erwärmt und über einen Tropftrichter innerhalb von 30 min bei Raumtemperatur zu einer Suspension von Mo(CO)₆ (5.00 g, 18.9 mmol) in Diethylether getropft. Alle flüchtigen Komponenten wurden unter vermindertem Druck bei Raumtemperatur entfernt. Eine Lösung von [Me₄N]Br (4.38 g, 29.4 mmol) in demineralisiertem Wasser (50 ml) wurde zum resultierenden braunen Feststoff gegeben und für 15 min gerührt. Der entstehende Niederschlag wurde abfiltriert, mit demineralisiertem Wasser gewaschen und im Vakuum getrocknet. Das Produkt wurde als orangefarbener Feststoff erhalten (6.13 g, 13.8 mmol, 73%). **¹H-NMR** (400 MHz, CD₂Cl₂): Hauptisomer: *δ* = 7.57 (d, ³*J*_{H-H} = 8.8 Hz, *H*Ar, 2H), 6.87 (d, ³*J*_{H-H} = 8.8 Hz, *H*Ar, 2H), 3.81 (s, OMe, 3H), 3.32 (s, NMe₄, 12H) ppm, Nebenisomer: *δ* = 7.83 (d, ³*J*_{H-H} = 8.8 Hz, *H*Ar, 2H), 7.28 (d, ³*J*_{H-H} = 8.8 Hz, *H*Ar, 2H) 3.79 (s, OMe, 3H), 3.32 (s, NMe4, 12H) ppm.

### Synthese von Mo(CC6H4OMe)Br3(DME) (P2):

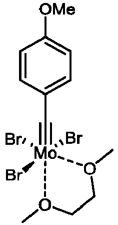

Eine Suspension von **P1** (6.13 g, 13.8 mmol) in Methylenchlorid (150 mL) wurde für 15 min bei -78 °C gerührt, bevor eine Lösung von Oxalylbromid (3.075 g, 14.2 mmol) in Methylenchlorid (5 ml) über 10 min zugegeben wurde. Das Reaktionsgemisch wurde auf -20 °C aufgewärmt, bis ein Farbumschlag von lila nach gelbbraun beobachtet wurde. Die Suspension wurde wieder auf -78 °C gekühlt und über eine auf -78 °C gekühlte Celiteschicht in einen mit Dimethoxyethan (7.1 mL, 68.8 mmol) gefüllten Schlenkkolben filtriert. Das Filtrat wurde für 10 Minuten auf -78°C gekühlt bevor eine Lösung von Brom (0.73 mL, 14.2 mmol) in Methylenchlorid (4 mL) über 30 min bei -78 °C zugetropft wurde. Die Lösung wurde innerhalb von einer Stunde auf Raumtemperatur erwärmt und eine Stunde bei Raumtemperatur gerührt. Das Lösungsmittel wurde bis auf einen Rest von etwa 40 mL entfernt und unter Rühren *n*-Pentan (300 mL) zugegeben. Der Niederschlag wurde abfiltriert und im Vakuum getrocknet. Der Feststoff wurde in Methylenchlorid gelöst und über Celite filtriert. Alle flüchtigen Komponenten des Filtrats wurden unter vermindertem Druck entfernt, um das Produkt als braunen Feststoff zu erhalten (5.67 g, 10.4 mmol, 76%): **¹H-NMR** (400 MHz, CD₂Cl₂) *δ* = 7.43 (d, ³*J*_{H-H} = 8.8 Hz, *H*Ar, 2H), 6.97 (d, ³*J*_{H-H} = 8.8 Hz, *H*Ar, 2H), 4.03 (s, DME, 4H), 3.93 (s, DME, 3H), 3.89 (s, DME, 3H), 3.88 (s, OMe, 3H) ppm.

### Synthese von Mo(CC6H4OMe)(OC(CF3)2Me)3(DME) (P3):

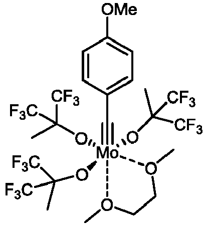

Zu einer auf -30 °C gekühlten Suspension von **P2** (4.14 g, 7.59 mmol) in Diethylether (100 mL) wurde eine auf -30 °C gekühlte Lösung von KOC(CF₃)₂Me (5.18 g, 23.5 mmol) langsam zugegeben und für 18 h bei Raumtemperatur gerührt. Anschließend wurde die Suspension über Celite filtriert und alle flüchtigen Komponenten des Filtrats wurden unter vermindertem Druck entfernt. Der Rückstand wurde in *n*-Pentan gelöst und über Celite filtriert. Alle flüchtigen Komponenten wurden unter vermindertem Druck entfernt und der entstehende Feststoff in *n*-Pentan umkristallisiert, um das Produkt als braune Kristalle zu erhalten (4.45 g, 5.24 mmol, 69%): **¹H-NMR** (400 MHz, CD₂Cl₂) *δ* = 7.14 (d, ³*J*_{H-H} = 9.0 Hz, HAr, 2H), 6.80 (d, ³*J*_{H-H} = 9.0 Hz, HAr, 2H), 3.79 (s, OMe, 3H), 3.70 (s, DME, 4H), 3.57 (s, DME, 6H), 1.85 (s, C(CF₃)₂ 9H) ppm.

### Synthese von Mo(CC6H4OMe)(OCH(CF3)2)3(DME) (P4):

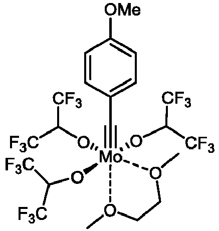

Zu einer auf -30 °C gekühlten Suspension von **P2** (1.01 g, 1.85 mmol) in Diethylether (100 mL) wurde eine auf -30 °C gekühlte Lösung von KOCH(CF₃)₂ (1.18 g, 5.72 mmol) langsam zugegeben und für 18 h bei Raumtemperatur gerührt. Anschließend wurde die Suspension über Celite filtriert und alle flüchtigen Komponenten des Filtrats unter vermindertem Druck entfernt. Der Rückstand wurde in *n*-Pentan gelöst und nochmals über Celite filtriert. Alle flüchtigen Komponenten wurden unter vermindertem Druck entfernt und der entstehende Feststoff in Diethylether und *n*-Pentan umkristallisiert, um das Produkt als rosafarbene Kristalle zu erhalten (310 mg, 0.38 mmol, 21%): **¹H-NMR** (400 MHz, C₆D₆) *δ* = 6.97 (d, ³*J*_{H-H} = 8.9 Hz, HAr, 2H), 6.39 (d, ³*J*_{H-H} = 8.9 Hz, HAr, 2H), 5.84 (s, C*H*(CF₃)₂, 3H), 3.17 (s, DME, 6H), 3.12 (s, OMe, 3H), 2.84 (s, DME, 4H) ppm; **¹⁹F NMR** (376 MHz, C₆D₆) *δ* = -74.41 (9F), -74.42 ppm (9F); **¹³C NMR** (101 MHz, C₆D₆) *δ* = 297.1 (*C*C₆H₄OMe), 161.1 (Ar), 136.1 (Ar), 132.5 (Ar), 123.4 (q, CF₃, ¹*J*_{C-F} = 286.7 Hz), 113.9 (Ar), 85.0 (sept, *C*H(CF₃)₂, ²*J*_{C*-*F} = 31.5 Hz), 71.7 (DME), 63.9 (DME), 54.9 (OMe) ppm. Elementaranalyse berechnet für C₂₁H₂₀F₁₈MoO₆: C, 31.28; H, 2.50. gefunden: C, 30.91 H, 2.60.

### Synthese von Mo(CC6H4OMe)(OC6F5)3(1,3-diisopropylimidazol-2-yliden) (A1):

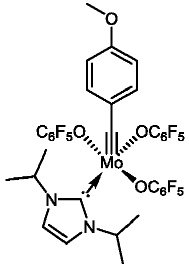

Zu einer Suspension von Mo(CC₆H₄OMe)(OC₆F₅)₃(DME) (102 mg, 0.12 mmol) in Toluol wurde bei -30 °C eine auf -30 °C gekühlte Lösung von 1,3-Diisopropylimidazol-2-yliden (18.1 mg, 0.12 mmol) in Toluol getropft. Das Reaktionsgemisch wurde innerhalb von 1 h auf Raumtemperatur aufgewärmt und dann 3 h bei 40 °C gerührt. Alle flüchtigen Komponenten wurden unter vermindertem Druck entfernt und der resultierende Feststoff wurde aus Methylenchlorid, Diethylether und *n*-Pentan umkristallisiert, um das Produkt als dunkelbraune Kristalle zu erhalten (39.0 mg, 0.04 mmol, 35%): **¹H-NMR** (400 MHz, CD₂Cl₂) *δ* = 7.19 (s, HAr, 2H), 6.69 (s, HAr, CH_{Imidazol}, 4H), 5.01 (m, *ⁱ*Pr, 2H), 3.76 (s, OMe, 3H), 1.27 (d, ³*J*_{H-H} = 6.6 Hz, *ⁱ*Pr 12H) ppm; **¹⁹F-NMR** (376 MHz, CD₂Cl₂) *δ* = -162.44 (6F), -166.33 (4F), -167.45 (2F), -171.44 (2F), - 173.20 (1F); **¹³C-NMR** (101 MHz, C₆D₆) *δ* = 304.4 (*C*C₆H₄OMe), 184.6 (NCN), 161.4 (Ar), 143.8 (OC), 139.7 (d, CF, ¹*J*_{C-F} = 241.8 Hz), 138.5 (d, CF, ¹*J*_{C-F} = 248.0 Hz), 137.4 (Ar), 134.8 (d, CF, ¹*J*_{C-F} = 245.5 Hz), 131.9 (Ar), 117.3 (Ar), 113.6 (Ar), 54.80 (OMe), 53.17 (*ⁱ*Pr), 23.23 (*ⁱ*Pr). Elementaranalyse berechnet für C₃₅H₂₃F₁₅MoN₂O₄: C, 45.55; H, 2.53; N, 3.06. Gemessen: C, 45.55; H, 2.74; N, 3.20.

### Synthese von Mo(CC6H4OMe)(OCH(CF3)2)3(1,3-diisopropylimidazol-2-yliden) (A2):

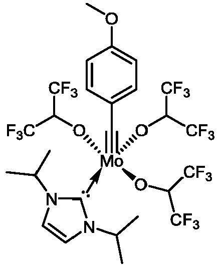

Zu einer auf -40 °C gekühlten Lösung von **P4** (50 mg, 0.06 mmol) in Toluol wurde eine auf -40 °C gekühlte Lösung von 1,3-Diisopropylimidazol-2-yliden (9.8 mg, 0.06 mmol) in Toluol getropft. Das Reaktionsgemisch wurde für 18 h bei Raumtemperatur gerührt. Alle flüchtigen Komponenten wurden unter vermindertem Druck entfernt. Der zurückbleibende Feststoff wurde aus Diethylether und *n*-Pentan umkristallisiert, um das Produkt als rote Kristalle zu erhalten (33.1 mg, 0.04 mmol, 67%): **¹H-NMR** (400 MHz, CDCl₃) *δ* = 7.13 (m, CH_{Imidazolium}, HAr, 4H), 6.83 (d, ³*J*_{H-H} = 9.0 Hz, HAr, 2H), 5.27 (m, C*H*(CF₃)₂, 3H), 3.82 (s, OMe, 3H), 1.54 (s, *ⁱ*Pr, 2H), 1.36 (d, ³*J*_{H-H} = 6.7 Hz, *ⁱ*Pr, 12H) ppm; **¹⁹F-NMR** (376 MHz, CDCl₃) *δ* = -73.51 (s) ppm.

### Immobilisierung des Imidazoliumsalzes L3 Salzes auf Silikagel (I1):

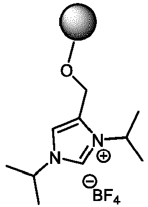

In einem Druckrohr wurden Silikagel (200 mg, 0.42 mmol SiOH) und **L3** (240 mg, 0.62 mmol) in 1,2-Dichloroethan (25 mL) suspendiert und für 18 h bei 130 °C gerührt. Nachdem das Reaktionsgemisch abgekühlt war, wurde das Silikagel abfiltriert, mehrmals mit Methylenchlorid und Diethylether gewaschen und im Vakuum getrocknet.

### Immobilisierung von L3 auf teilweise dehydroxiliertem Silikagel (I1*):

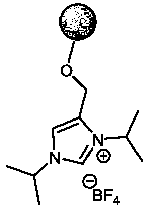

In einem Druckrohr wurden teilweise dehydroxiliertes Silikagel (5 h getrocknet unter Vakuum bei 500°C, anschließend 10 h unter Vakuum bei 650 °C, 1.13 g) und **L3** (100 mg, 0.26 mmol) in 1,2-Dichloroethan (30 mL) suspendiert und für 18 h bei 130 °C gerührt. Anschließend wurde das Silikagel abfiltriert und mehrmals mit Methylenchlorid und Diethylether gewaschen und im Vakuum getrocknet.

### Schützen der restlichen Silanolgruppen mit Trimethylsilylchlorid (I2/I2*):

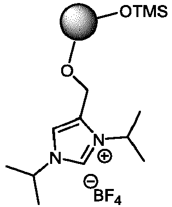

Zu einer Suspension von **I1** (200 mg) in Methylenchlorid wird Trimethylsilylchlorid (1.5 mL, 11.8 mmol) gegeben und für 18 h bei Raumtemperatur gerührt. Anschließend wurde das Silikagel abfiltriert, mit Methylenchlorid und Diethylether gewaschen und im Vakuum getrocknet. Das Schützen der Silanolgruppen von **I1*** wurde analog durchgeführt.

### Deprotonierung des immobilisierten Imidazoliumsalzes (I3/I3*):

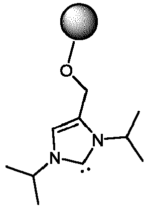

Eine Lösung von Lithiumhexamethyldisilazid (103.7 mg, 0.62 mmol) in Tetrahydrofuran wurde langsam zu einer Suspension von **I2** (200 mg) in Tetrahydrofuran gegeben und 2 h bei Raumtemperatur gerührt. Anschließend wurde das Silikagel abfiltriert, mit DMSO, Tetrahydrofuran und Diethylether gewaschen und im Vakuum getrocknet. Die Deprotonierung von **I2*** verlief analog.

### Immobilisierung von Mo(CC6H4OMe)(OC(CF3)2Me)3(DME) (K1/K1*):

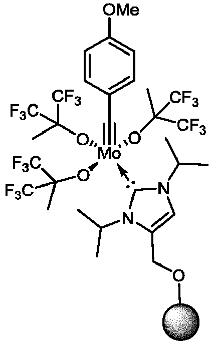

**I3** wurde in Toluol suspendiert und eine Lösung von P3 (340 mg, 0.40 mmol) wurde zugegeben. Das Reaktionsgemisch wurde für 18 h bei Raumtemperatur gerührt. Das Silikagel wurde abfiltriert und mehrfach mit Toluol und Diethylether gewaschen und im Vakuum getrocknet. Die Immobilisierung auf **I3*** verlief analog.

### Bestimmung des Molybdängehalts mittels ICP-OES Messung:

**K1** (8.5 mg) wurde eingewogen und Königswasser (5 mL) zugegeben. Das Gemisch wurde für 1 h in der Mikrowelle auf 160 °C erhitzt. Das Gemisch wurde mit demineralisiertem Wasser auf 25 mL verdünnt und über einen CHROMAFIL Xtra Spritzenfilter (RC 0.20) filtriert. Der Molybdängehalt der Probe wurde durch eine ICP-OES-Messung auf 5.6 mg·L⁻¹ bestimmt, was 1.64 wt-% oder 0.17 mmol Molybdän pro Gramm Silikagel entspricht. Die Bestimmung des Molybdängehalts der anderen immobilisierten Katalysatoren verlief analog. Für die Kalibrierung wurden wässrige Standardlösungen mit 0.00, 0.10, 1.00 und 5.00 mg·L⁻¹ Molybdängehalt (5% HNO₃, Chem-Lab, Zedelgem, Belgien) verwendet. Molybdän wurde bei *λ* = 202.095 nm, der Hintergrund bei *λ* = 430.01 nm gemessen.

### Beispiel 17: Selbstmetathesereaktionen von Alkinen mit den Katalysatoren A0, K1 und K1*

### Allgemeine Arbeitsvorschrift für Metathesereaktionen mit immobilisiertem Katalysator:

Der immobilisierte Katalysator (**K1** oder **K1***, 3 mg) wurde mit 300 mg gemörsertem 5 Ä Molekularsieb in Toluol (2 mL) suspendiert. Eine Lösung des jeweiligen Substrats (20 - 40 mg) und 0.1 mL Mesitylen in Toluol (2 mL) wurde zum Katalysator gegeben und für 4 h bei Raumtemperatur gerührt. Die Umsätze wurden via GC-MS bestimmt.

Die Reaktivität der Katalysatoren in der Selbstmetathese wurde mit mehreren Substraten bei Raumtemperatur untersucht, wie im untenstehenden Reaktionsschema gezeigt. Um das Gleichgewicht auf die Seite der Produkte zu verschieben wurde gemörsertes 5 Ä Molekularsieb zugegeben.

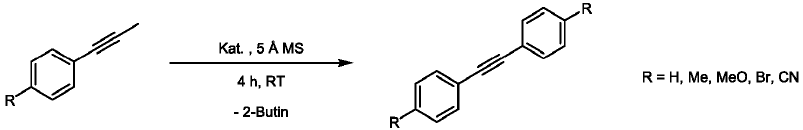

Die untersuchten Katalysatoren und verwendeten Substrate sind nachstehend abgebildet.

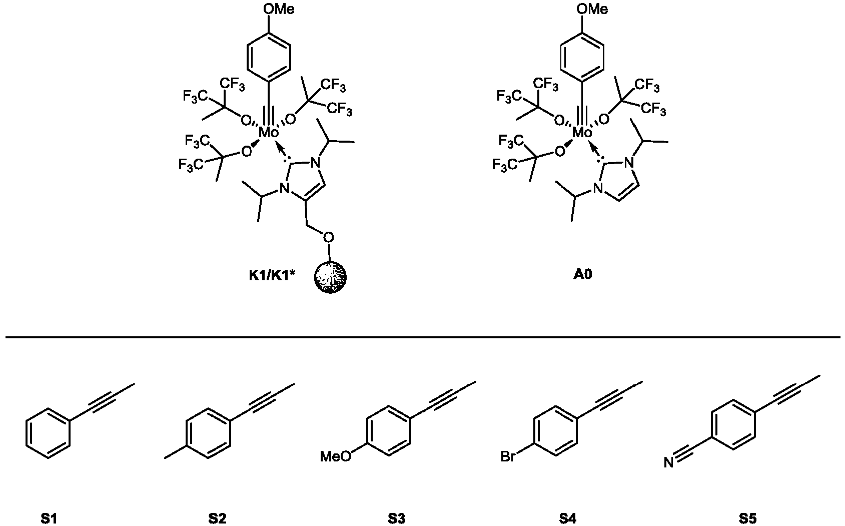

Um die Katalysatoren zu vergleichen wurde in allen Reaktionen ein Katalysator:Substratverhältnis von 1:1000, Toluol als Lösungsmittel, und Mesitylen als interner Standard verwendet. Die Umsätze der Reaktionen in % bei Raumtemperatur sind in der folgenden Tabelle 4 angegeben:

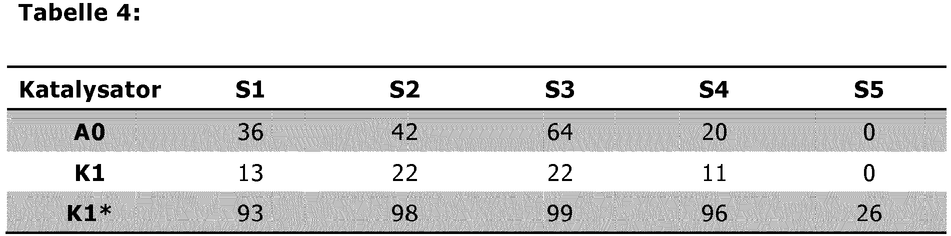

### Beispiel 18: Synthese von [(≡SiO)Mo((CF₃)₂MeCO)₂≡Ph(4-OMe))(1,3-Me₂-imidazol-2-yliden))]:

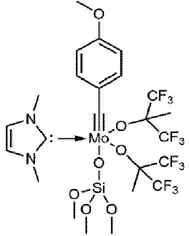

In einer N₂-befüllten Schutzgasbox wurde eine Lösung von Mo((CF₃)₂MeCO)₃(≡Ph(4-OMe))(1,3-Me₂-imidazol-2-yliden) (27 mg, 0.031 mmol, 1.00 equiv.) in Benzol (2 mL) zu einer Suspension von SiO₂-(700) (100 mg, 0.031 mmol SiOH, 1 equiv.) in Benzol (3 mL) bei 25°C zugefügt. Die Suspension wurde langsam für 24 Stunden gerührt. Der gesamte Feststoff wurde abfiltriert, mit Benzol in drei konsekutiven Resuspendierungs- bzw. Wasch- und Filtrationsschritten gewaschen (3x3 mL). Der resultierende bräunliche Feststoff wurde im Hochvakuum (10-5 mbar) bei Raumtemperatur für 4h getrocknet; auf diese Weise wurden 110 mg des geträgerten Katalysators erhalten. Die vereinigten Filtrate wurden mittels ¹H und ¹⁹F NMR (in C₆D₆) unter Verwendung von 1,4-Dioxan als internen Standard analysiert: 0.023 mmol (CF₃)₂CH₃COH wurden im Zuge des Pfropfprozesses freigesetzt.

Der beschriebene Katalysator wurde auf seine Reaktivität gegenüber der Selbstmethathese von 1-Phenyl-1-propin und 1-(4-Methoxyphenyl)-1-propin untersucht, wobei die Umsetzungen analog der Beschreibung in Beispiel 17 durchgeführt wurden. Die für die jeweiligen Umsetzungen bestimmte TON (= turn over number) ist in der folgenden Tabelle 5 wiedergegeben.

**Tabelle 5:**

| **Substrat** | **Produktivität (TON)** |
|---|---|
| 1-Phenyl-1-propin | 990^{a)} |
| 1-(4-Methoxyphenyl)-1-propin | 990 ^{a)} |
| 1-Phenyl-1-propin | 4400 ^{b)} |

| | |
|---|---|
| Reaktionsbedingungen: Toluol, Raumtemperatur, 4 Stunden, interner Standard: *tert*-Butylbenzol, ^{a)} 350 mg 5 Å Molsieb, Katalysator:Substrat=1:1000,^{b)} 550 mg 5 Å Molsieb, Katalysator:Substrat=1:10000. | |

## Patentansprüche

1. Neutraler oder kationischer Metallalkylidin-N-heterozyklischer Carben (NHC) Komplex gemäß den allgemeinen Formeln **I** bis **VI, dadurch gekennzeichnet, dass** 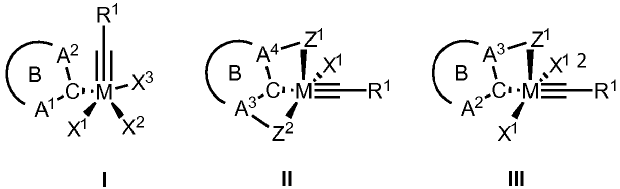 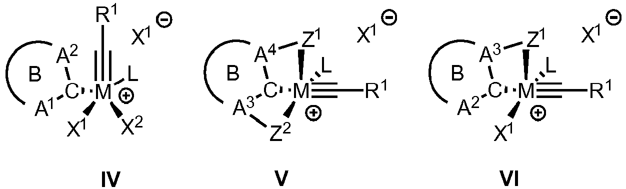
A¹ für NR² oder PR², A² für CR²R^{2'}, NR², PR², O oder S steht, A³ bzw. A⁴ für S, N oder P steht, C für ein Carben-Kohlenstoffatom steht,
R², R^{2'} unabhängig voneinander für einen C₃-C₁₈ Trialkylsilyl, Triarylsilyl, ArylAlkylsilyl, einen linearen, teilzyklischen oder verzweigten C₁-C₁₈-Alkyl-, insbesondere einen C₁-C₇-Alkyl-, einen C₃-C₁₂-Cycloalkyl-, insbesondere einen C₃-C₆-Cycloalkyl-, einen linearen, teilzyklischen oder verzweigten C₁-C₁₈-Alkoxy-, insbesondere einen C₁-C₇-Alkoxy-, einen C₃-C₁₂-Cycloalkoxy-, insbesondere einen C₃-C₆-Cycloalkoxy-, einen linearen, teilzyklischen oder verzweigten C₆-C₁₀₀-Polyoxaalkyl-, insbesondere C₆-C₃₀-Polyoxaalkyl-, einen C₅-C₁₄-Aryl- oder -Heteroaryl-Rest, einen C₅-C₁₄-Aryloxy- oder -Heteroaryloxy-Rest, einen C₅-C₁₄-Arylthio- oder -Heteroarylthio-Rest, einen linearen, teilzyklischen oder verzweigten C₁-C₁₈-Perhaloalkyl-, insbesondere C₁-C₇-Per-haloalkyl-, einen linearen, teilzyklischen oder verzweigten C₁-C₁₈-Perhalo-alkoxy-, insbesondere C₁-C₇-Perhaloalkoxy-, einen linearen, teilzyklischen oder verzweigten teilhalogenierten C₁-C₁₈-Alkyl-, insbesondere einen teilhalogenierten C₁-C₇-Alkyl-, einen linearen, teilzyklischen oder verzweigten teilhalogenierten C₁-C₁₈-Alkoxy-, insbesondere einen teilhalogenierten C₁-C₇-Alkoxy-, einen per- oder teilhalogenierten C₆-C₁₄-Aryl-, einen per- oder teilhalogenierten C₆-C₁₄-Aryloxyrest, steht, wobei Halogen = F, Cl, Br, I ist, und, wenn A¹ und A² jeweils für NR² oder PR² stehen, R² gleich oder verschieden sind,
der Ring B ein unsubstituierter oder ein ein- oder mehrfach substituierter 5-bis 7-gliedriger Ring ist, der neben A¹, A², A³ bzw. A⁴ weitere Heteroatome in Form von Stickstoff, Phosphor, Sauerstoff oder Schwefel enthalten kann und dessen Substituenten die für R² beschriebene Bedeutung haben können,
X¹, X² bzw. X³ in Formeln I bis VI gleich oder verschieden sind und aus der Gruppe umfassend Halogen, C₁-C₁₈ Carboxylate, C₁-C₁₈-Alkoxide, halogenierte, teilhalogenierte, lineare, teilzyklischen oder verzweigte C₁-C₁₈ Alkoxide, C₁-C₁₈ mono- oder polyhalogenierte Carboxylate, un-, ein- oder mehrfach substituierte C₆-C₁₈-Mono-, Bi- oder Terphenolate, Trifluormethansulfonat, nicht koordinierende Anionen, inbesonders Tetrakis(3,5-bis(trifluormethyl)phenyl)borat, Tetrakis(pentafluorophenyl)-borat, Tetrakis(nonafluoro-t-butoxy)aluminat, Tetrafluoroborat, Hexafluorophosphat und Hexafluoroantimonat ausgewählt sind, wobei die Substituenten an den Mono-, Bi- oder Terphenolaten neben Halogen C₁-C₁₈-Alkoxy-, halogenierte C₁-C₁₈ Alkoxy- oder C₁-C₁₈ Alkylgruppen sein können, des Weiteren unabhängig voneinander für einen C₃-C₁₈ Trialkylsilyl, eine Triarylsilyl, einen C₈-C₁₈ Aryl-Alkylsilyl, einen linearen, teilzyklischen oder verzweigten C₁-C₁₈-Alkyl-, insbesondere einen C₁-C₇-Alkyl-, einen C₃-C₁₂-Cycloalkyl-, insbesondere einen C₃-C₆-Cycloalkyl-, einen linearen, teilzyklischen oder verzweigten C₁-C₁₈-Alkoxy-, insbesondere einen C₁-C₇-Alkoxy-, einen C₃-C₁₂-Cycloalkoxy-, insbesondere einen C₃-C₆-Cycloalkoxy-, einen linearen, teilzyklischen oder verzweigten C₆-C₁₀₀-Polyoxaalkyl-, insbesondere C₆-C₃₀-Polyoxaalkyl-, einen C₅-C₁₄-Aryl- oder -Heteroaryl-Rest, einen C₅-C₁₄-Aryloxy- oder -Heteroaryloxy-Rest, einen C₅-C₁₄-Arylthio- oder -Heteroarylthio-Rest, einen linearen, teilzyklischen oder verzweigten C₁-C₁₈-Perhaloalkyl-, insbesondere C₁-C₇-Perhaloalkyl-, einen linearen, teilzyklischen oder verzweigten C₁-C₁₈-Perhaloalkoxy-, insbesondere C₁-C₇-Perhaloalkoxy-, einen linearen, teilzyklischen oder verzweigten teilhalogenierten C₁-C₁₈-Alkyl-, insbesondere einen teilhalogenierten C₁-C₇-Alkyl-, einen linearen, teilzyklischen oder verzweigten teilhalogenierten C₁-C₁₈-Alkoxy-, insbesondere einen teilhalogenierten C₁-C₇-Alkoxy-, einen per- oder teilhalogenierten C₆-C₁₄-Aryl-, einen per- oder teilhalogenierten C₆-C₁₄-Aryloxy-, steht, Halogen = F, Cl, Br, I ist,
M in den Formeln I, II, III, IV, V oder VI für Mo oder W steht,
L eine freie Koordinationsstelle oder ein koordinierendes Lösemittel ist, insbesondere in Form von Diethylether, Acetonitril, Tetrahydrofuran, Trimethylacetonitril, Pyridin oder Lutidin,
in den Formeln IV, V oder VI auch mehrere Lösemittelmoleküle koordinieren können, wobei diese die oben für L genannte Bedeutung haben können,
R¹ in den Formeln I bis VI unabhängig voneinander H oder ein aliphatischer oder aromatischer Rest ist, insbesondere eine lineare oder verzweigte C₁-C₁₈ Alkyl-Gruppe, bevorzugt in Form einer *tert*-Butyl-, Methyl-, 4-Methoxyphenyl- oder Ferrocenyl-Gruppe, oder eine unsubstituierte oder ein- oder mehrfach substituierte C₆-C₁₄-Aryl-Gruppe, wobei die Substituenten die für R² genannten Bedeutungen haben, und
Z¹ und Z² unabhängig voneinander eine lineare, teilzyklische oder verzweigte C₁-C₁₀-Alkylenoxy-, insbesondere eine C₁-C₅-Alkylenoxy-, eine lineare, teilzyklische oder verzweigte C₁-C₁₀-Alkylenthio-, insbesondere eine C₁-C₅-Alkylenthio-, eine lineare, teilzyklische oder verzweigte C₁-C₁₀-Alkylen-NR²-, insbesondere eine C₁-C₅-Alkylen-NR²-, eine C₆-C₁₀-Arylenoxy-, eine per- oder teilfluorierte C₆-C₁₄-Arylenoxy-, eine per- oder teilchlorierte C₆-C₁₄-Arylenoxy-, eine per- oder teilbromierte C₆-C₁₄-Arylenoxy-, eine C₆-C₁₄-Arylenthio-, eine per- oder teilfluorierte C₆-C₁₄-Arylenthio-, eine per- oder teilchlorierte C₆-C₁₄-Arylenthio-, eine per- oder teilbromierte C₆-C₁₄-Arylenthio- oder eine C₆-C₁₄-Arylen-NR²-, eine per- oder teilfluorierte C₆-C₁₄-Arylen-NR²-, eine per- oder teilchlorierte C₆-C₁₄-Arylen-NR²-, eine per- oder teilbromierte C₆-C₁₄-Arylen-NR²-, eine C₆-C₁₄-Arylen-PR²-, eine per- oder teilfluorierte C₆-C₁₄-Arylen-PR²-, eine per- oder teilchlorierte C₆-C₁₄-Arylen-PR²-, eine per- oder teilbromierte C₆-C₁₄-Arylen-PR²-, eine Carboxyl, eine Thiocarboxyl oder eine Dithiocarboxyl-Gruppe sind.

2. Komplex gemäß Anspruch 1, **dadurch gekennzeichnet, dass** der Ring B ein aus der Gruppe umfassend 1,3-disubstituierte Imidazol-2-ylidene, 1,3-disubstituierte Imidazolin-2-ylidene, 1,3-disubstituierte Imidazol-5-ylidene, 1,3-disubstituierte Tetrahydropyrimidin-2-ylidene, 1,3-disubstituierte Diazepin-2-ylidene, 1,3-disubstituierte Dihydrodiazepin-2-ylidene, 1,3-disubstituierte Tetrahydrodiazepin-2-ylidene, N-substituierte Thiazol-2-ylidene, N-substituierte Thiazolin-2-ylidene, N-substituierte Triazol-2-ylidene, N-substituierte Dihydrotriazol-2-ylidene, ein- oder mehrfach substituierte Triazolin-2-ylidene, N-substituierte Thiadiazol-2-ylidene, ein- oder mehrfach substituierte Thiadiazolin-2-ylidene, ein- oder mehrfach substituierte Tetrahydrotriazol-2-ylidene, ein- oder mehrfach substituierte 1,2,3-Triazol-5-ylidene oder ein- oder mehrfach substituierte Oxazol-2-ylidene oder 1,2,4-Triazol-3-ylidene ausgewählter Heterozyklus ist.

3. Komplex gemäß Anspruch 2, **dadurch gekennzeichnet, dass** der Ring B ein aus der Gruppe umfassend, 1,3-disubstituierte Imidazol-2-ylidene, 1,3-disubstituierte Imidazolin-2-ylidene, 1,3-disubstituierte Imidazol-5-ylidene, N-substituierte Thiazol-2-ylidene und N-substituierte Thiazolin-2-ylidene ausgewählter Heterozyklus ist.

4. Komplex gemäß mindestens einem der Ansprüche 1 bis 3, **dadurch gekennzeichnet, dass** der Ring B kovalent über eine Abstandsgruppe an einen festen Träger gebunden ist.

5. Komplex gemäß mindestens einem der Ansprüche 1 bis 3, **dadurch gekennzeichnet, dass** X¹ und/oder X² kovalent über eine Abstandsgruppe an einen festen Träger gebunden ist.

6. Komplex gemäß den Ansprüchen 4 oder 5, **dadurch gekennzeichnet, dass** der feste Träger ein polymerer Träger, insbesondere auf Basis von PS-DVB, und die Abstandsgruppe bevorzugt eine C₁-C₂₀-α,ω-Dioxaalkylen- oder eine C₁-C₂₀-Alkylenoxy-Gruppe ist.

7. Komplex gemäß den Ansprüchen 4 oder 5, **dadurch gekennzeichnet, dass** der feste Träger ein anorganischer Träger, insbesondere auf Basis von Siliziumdioxid, und die Abstandsgruppe oder X¹ und/oder X² bevorzugt eine Alkyl-Si(O)₃-, eine Alkyl-Aryl-SiR(O)₂- eine Diaryl-SiR(O)₂- oder eine OSi(O)₃-Gruppe ist, bei der die Alkylgruppen lineare, teilzyklisch oder verzweigt C₁-C₁₈-Alkyl-, insbesondere C₁-C₇-Alkyl-, C₃-C₁₂-Cycloalkyl-, insbesondere C₃-C₆-Cycloalkyl- und die Arylgruppen un-, ein- oder mehrfach substituierte C₆-C₁₄-Aryl-Gruppen sein können, wobei die Substituenten die für R² genannten Bedeutungen haben können.

8. Komplex gemäß mindestens einem der Ansprüche 1 bis 3, **dadurch gekennzeichnet, dass** M direkt über ein Sauerstoffatom an einen festen Träger gebunden ist, wobei der Träger vorzugsweise ein anorganischer oxidischer Träger, besonders bevorzugt auf Basis von Siliziumdioxid ist.

9. Verwendung eines Komplexes nach mindestens einem der vorstehenden Ansprüche als Katalysator in Alkinmetathesereaktionen.

10. Verwendung nach Anspruch 9, **dadurch gekennzeichnet, dass** es sich bei den Alkinmetathesereaktionen um eine asymmetrische oder desymmetrisierende Ringschlussmetathese, eine Kreuzmetathese, eine Ring öffnende Kreuzmetathese oder eine Diinpolymerisation handelt.

11. Verwendung der Verbindungen mindestens nach einem der vorstehenden Ansprüche als Katalysator in der Polymerisation zyklischer Olefine.

## Claims

1. A neutral or cationic metal alkylidine N-heterocyclic carbene (NHC) complex according to the general formulae I to **VI, characterized in that** 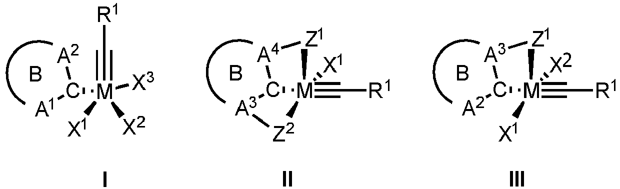 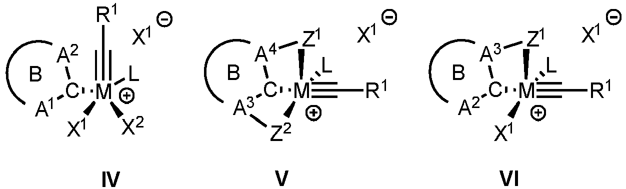
A¹ represents NR² or PR², A² represents CR²R^{2'}, NR², PR², O or S, A³ and A⁴, respectively, represents S, N or P, C represents a carbene carbon atom,
R², R^{2'} independently of one another represent a C₃-C₁₈ trialkylsilyl, triarylsilyl, arylalkylsilyl, a linear, partially cyclic or branched C₁-C₁₈ alkyl, in particular a C₁-C₇ alkyl, a C₃-C₁₂ cycloalkyl, in particular a C₃-C₆ cycloalkyl, a linear, partially cyclic or branched C₁-C₁₈ alkoxy, in particular a C₁-C₇ alkoxy, a C₃-C₁₂ cycloalkoxy, in particular a C₃-C₆ cycloalkoxy, a linear, partially cyclic or branched C₆-C₁₀₀ polyoxaalkyl, in particular C₆-C₃₀ polyoxaalkyl, a C₅-C₁₄ aryl or heteroaryl residue, a C₅-C₁₄ aryloxy or heteroaryloxy residue, a C₅-C₁₄ arylthio or heteroarylthio residue, a linear partially cyclic or branched C₁-C₁₈ perhaloalkyl, in particular C₁-C₇ perhaloalkyl, a linear, partially cyclic or branched C₁-C₁₈ perhaloalkoxy, in particular C₁-C₇ perhaloalkoxy-, a linear, partially cyclic or branched partially halogenated C₁-C₁₈ alkyl, in particular a partially halogenated C₁-C₇ alkyl, a linear, partially cyclic or branched partially halogenated C₁-C₁₈ alkoxy, in particular a partially halogenated C₁-C₇ alkoxy-, a per- or partially halogenated C₆-C₁₄ aryl, a per- or partially halogenated C₆-C₁₄ aryloxy residue, where halogen is = F, Cl, Br, I, and, if A¹ and A² each represent NR² or PR², R² are identical or different,
the ring B is an unsubstituted or a mono- or polysubstituted 5- to 7-membered ring which, in addition to A¹, A², A³ or A⁴, may contain further heteroatoms in the form of nitrogen, phosphorus, oxygen or sulphur and whose substituents may have the meaning as described for R²,
X¹, X² and X³ in formulae I to VI are same or different and are selected from the group consisting of halogen, C₁-C₁₈ carboxylates, C₁-C₁₈ alkoxides, halogenated, partially halogenated, linear, partially cyclic or branched C₁-C₁₈ alkoxides, C₁-C₁₈ mono- or polyhalogenated carboxylates, non-, mono- or polysubstituted C₆-C₁₈ mono-, bi- or terphenolates, trifluoromethane sulphonate, non-coordinating anions, in particular tetrakis(3,5-bis(trifluoromethyl)phenyl)borate, tetrakis(pentafluorophenyl)borate, tetrakis(nonafluoro-t-butoxy)aluminate, tetrafluoroborate, hexafluorophosphate and hexafluoroantimonate, wherein the substituents on the mono-, bi- or terphenolates, in addition to halogen, may be C₁-C₁₈ alkoxy, halogenated C₁-C₁₈ alkoxy or C₁-C₁₈ alkyl groups, furthermore independently of one another stand for a C₃-C₁₈ trialkylsilyl, a triarylsilyl, a C₈-C₁₈ arylalkylsilyl, a linear, partially cyclic or branched C₁-C₁₈ alkyl, in particular a C₁-C₇ alkyl, a C₃-C₁₂ cycloalkyl, in particular a C₃-C₆ cycloalkyl, a linear, partially cyclic or branched C₁-C₁₈ alkoxy, in particular a C₁-C₇ alkoxy, a C₃-C₁₂ cycloalkoxy, in particular a C₃-C₆ cycloalkoxy, a linear, partially cyclic or branched C₆-C₁₀₀ polyoxaalkyl, in particular C₆-C₃₀ polyoxaalkyl, a C₅-C₁₄ aryl or heteroaryl residue, a C₅-C₁₄ aryloxy or heteroaryloxy residue, a C₅-C₁₄ arylthio or heteroarylthio residue, a linear, partially cyclic or branched C₁-C₁₈ perhaloalkyl, in particular C₁-C₇ perhaloalkyl, a linear, partially cyclic or branched C₁-C₁₈ perhaloalkoxy, in particular C₁-C₇ perhaloalkoxy, a linear, partially cyclic or branched partially halogenated C₁-C₁₈ alkyl, in particular a partially halogenated C₁-C₇ alkyl, a linear, partially cyclic or branched partially halogenated C₁-C₁₈ alkoxy, in particular a partially halogenated C₁-C₇ alkoxy, a per- or partially halogenated C₆-C₁₄ aryl, a per- or partially halogenated C₆-C₁₄ aryloxy, halogen is = F, Cl, Br, I,
M in the formulae I, II, III, IV, V or VI stands for Mo or W,
L is a free coordination site or a coordinating solvent, especially in the form of diethyl ether, acetonitrile, tetrahydrofuran, tri-methyl acetonitrile, pyridine or lutidine,
wherein in the formulae IV, V or VI also several solvent molecules can coordinate, whereby these may have the meaning given above for L,
R¹ in formulae I to VI independently of one another is H or an aliphatic or aromatic residue, in particular a linear or branched C₁-C₁₈ alkyl group, preferably in the form of a *tert*-butyl, methyl, 4-methoxyphenyl or ferrocenyl group, or an unsubstituted or mono- or polysubstituted C₆-C₁₄ aryl group, wherein the substituents have the meanings given for R², and
Z¹ and Z² independently of one another is a linear, partially cyclic or branched C₁-C₁₀-alkyleneoxy, in particular a C₁-C₅-alkyleneoxy, a linear, partially cyclic or branched C₁-C₁₀-alkylenethio, in particular a C₁-C₅-alkylenethio, a linear, partially cyclic or branched C₁-C₁₀-alkylene-NR²-, in particular a C₁-C₅-alkylene-NR²-, a C₆-C₁₀-aryleneoxy-, a per- or partially fluorinated C₆-C₁₄-aryleneoxy-, a per- or partially chlorinated C₆-C₁₄-aryleneoxy-, a per- or partially brominated C₆-C₁₄-aryleneoxy-, a C₆-C₁₄-arylene-thio-, a per- or partially fluorinated C₆-C₁₄-arylenethio-, a per- or partially chlorinated C₆-C₁₄-arylene-thio- , a per- or partially brominated C₆-C₁₄-arylene-thio- or a C₆-C₁₄-arylene-NR²-, a per- or partially fluorinated C₆-C₁₄-arylene-NR²-, a per- or partially chlorinated C₆-C₁₄-arylene-NR²-, a per- or partially brominated C₆-C₁₄-arylene-NR²-, a C₆-C₁₄-arylene-PR²-, a per- or partially fluorinated C₆-C₁₄-arylene-PR², a per- or partially chlorinated C₆-C₁₄-arylene-PR²-, a per- or partially brominated C₆-C₁₄-arylene-PR²-, a carboxyl, a thiocarboxyl or a dithiocarboxyl group.

2. The complex according to claim 1, **characterized in that** ring B is a heterocycle selected from the group consisting of 1,3-disubstituted imidazol-2-ylidenes, 1,3-disubstituted imidazolin-2-ylidenes, 1,3-disubstituted imidazol-5-ylidenes, 1,3-disubstituted tetrahydropyrimidin-2-ylidenes, 1,3-disubstituted diazepin-2-ylidenes, 1,3-disubstituted dihydrodiazepin-2-ylidenes, 1,3-disubstituted tetrahydrodiazepin-2-ylidenes, N-substituted thiazol-2-ylidenes, N-substituted thiazolin-2-ylidenes, N-substituted triazol-2-ylidenes, N-substituted dihydrotriazol-2-ylidenes, mono- or polysubstituted triazolin-2-ylidenes, N-substituted thiadiazol-2-ylidenes, mono- or polysubstituted thiadiazolin-2-ylidenes, mono- or polysubstituted tetrahydrotriazol-2-ylidenes, mono- or polysubstituted 1,2,3-triazol-5-ylidenes or mono- or polysubstituted oxazol-2-ylidenes or 1,2,4-triazol-3-ylidenes.

3. The complex according to claim 2, **characterized in that** ring B is a heterocycle selected from the group consisting of 1,3-disubstituted imidazol-2-ylidenes, 1,3-disubstituted imidazolin-2-ylidenes, 1,3-disubstituted imidazol-5-ylidenes, N-substituted thiazol-2-ylidenes and N-substituted thiazolin-2-ylidenes.

4. The complex according to at least one of claims 1 to 3, **characterized in that** the ring B is covalently bonded to a solid support via a spacer group.

5. The complex according to at least one of claims 1 to 3, **characterized in that** X¹ and/or X² is covalently bonded to a solid support via a spacer group.

6. The complex according to claims 4 or 5, **characterized in that** the solid support is a polymeric support, in particular based on PS-DVB, and the spacer group is preferably a C₁-C₂₀-α,ω dioxaalkylene or a C₁-C₂₀-alkyleneoxy group.

7. Complex according to claims 4 or 5, **characterized in that** the solid support is an inorganic support, in particular based on silicon dioxide, and the spacer group or X¹ and/or X² is preferably an alkyl-Si(O)₃-, an alkyl-aryl-SiR(O)₂-, a diaryl-SiR(O)₂- or an OSi(O)₃- group, in which the alkyl groups may be linear, partially cyclic or branched C₁-C₁₈-alkyl, in particular C₁-C₇-alkyl, C₃-C₁₂-cycloalkyl, in particular C₃-C₆-cycloalkyl, and the aryl groups may be non-, mono- or polysubstituted C₆-C₁₄-aryl groups, where the substituents may have the meanings given for R².

8. Complex according to at least one of claims 1 to 3, **characterized in that** M is bonded directly to a solid support via an oxygen atom, the support preferably being an inorganic oxidic support, particularly preferably based on silica.

9. Use of a complex according to at least one of the above claims as catalyst in alkyne metathesis reactions.

10. Use according to claim 9, **characterized in that** the alkyne metathesis reactions are an asymmetric or desymmetrical ring-closing metathesis, a cross-metathesis, a ring-opening cross-metathesis or a diine polymerisation.

11. Use of the compounds according to at least one of the above claims as a catalyst in the polymerisation of cyclic olefins.

## Revendications

1. Complexe carbène n-hétérocyclique (NHC) de type alkylidine renfermant du métal neutre ou cationique selon les formules générales I à VI, **caractérisé en ce que** 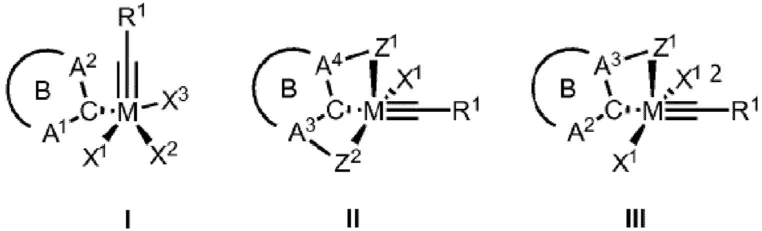 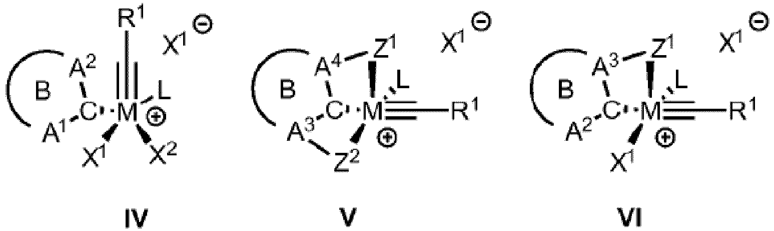
A¹ représente NR² ou PR², A² représente CR²R^{2'}, NR², PR², O ou S, A³ ou A⁴ représente S, N ou P, C représente un atome de carbone carbène,
R², R^{2'} représentent indépendamment l'un de l'autre du trialkylsilyle en C₃-C₁₈, du triarylsilyle, de l'arylalkylsilyle, un radical alkyle en C₁-C₁₈ linéaire partiellement cyclique ou ramifié, en particulier un radical alkyle en C₁-C₇, un radical cycloalkyle en C₃-C₁₂, en particulier un radical cycloalkyle en C₃-C₆, un radical alcoxy en C₁-C₁₈ linéaire, partiellement cyclique ou ramifié, en particulier un radical alcoxy en C₁-C₇, un radical cycloalcoxy en C₃-C₁₂, en particulier un radical cycloalcoxy en C₃-C₆, un radical polyoxaalkyle en C₆-C₁₀₀ linéaire, partiellement cyclique ou ramifié, en particulier un radical polyoxaalkyle en C₆-C₃₀, un radical aryle ou hétéroaryle en C₅-C₁₄, un radical aryloxy ou hétéroaryloxy en C₅-C₁₄, un radical arylthio ou hétéroarylthio en C₅-C₁₄, un radical perhaloalkyle en C₁-C₁₈ linéaire, partiellement cyclique ou ramifié, en particulier un radical perhaloalkyle en C₁-C₇, un radical perhaloalcoxy en C₁-C₁₈ linéaire, partiellement cyclique ou ramifié, en particulier un radical perhaloalcoxy en C₁-C₇, un radical alkyle en C₁-C₁₈ partiellement halogéné linéaire, partiellement cyclique ou ramifié, en particulier un radical alkyle en C₁-C₇ partiellement halogéné, un radical alcoxy en C₁-C₁₈ partiellement halogéné linéaire, partiellement cyclique ou ramifié, en particulier un radical alcoxy en C₁-C₇ partiellement halogéné, un radical aryle en C₆-C₁₄ perhalogéné ou partiellement halogéné, un radical aryloxy en C₆-C₁₄ perhalogéné ou partiellement halogéné, dans lequel l'halogène est = F, Cl, Br, I et, quand A¹ et A² représentent respectivement NR² ou PR², R² sont identiques ou différents,
le composé cyclique B est un composé cyclique non substitué ou un composé cyclique à 5 à 7 chaînons substitué une fois ou plusieurs fois, qui peut contenir, outre A¹, A², A³ ou A⁴, d'autres hétéroatomes sous la forme d'azote, de phosphore, d'oxygène ou de soufre et dont les substituants peuvent avoir la signification décrite pour R²,
X¹, X² ou X³ sont dans les formules I à VI identiques ou différents et sont choisis parmi le groupe contenant de l'halogène, des carboxylates en C₁-C₁₈, des alcoxydes en C₁-C₁₈, des alcoxydes en C₁-C₁₈ halogénés, partiellement halogénés, linéaires, partiellement cycliques ou ramifiés, des carboxylates en C₁-C₁₈ mono- ou polyhalogénés, des mono-, bi- ou terphénolates en C₆-C₁₈ non substitués, substitués une fois ou plusieurs fois, du trifluorométhansulfonate, des anions non coordonnés, en particulier du tétrakis(3,5-bis(trifluorométhyle)phényle)borate, du tétrakis(pentafluorophényle)-borate, du tétrakis(nonafluoro-t-butoxy)aluminate, du tétrafluoroborate, de l'héxafluorophosphate et de l'hexafluoroantimoniate, dans lequel les substituants sur les mono-, bi- ou terphénolates peuvent être outre l'halogène des groupes alcoxy en C₁-C₁₈, des groupes alcoxy en C₁-C₁₈ ou des groupes alkyle en C₁-C₁₈ halogénés, représentent par ailleurs indépendamment les uns des autres un trialkylsilyle en C₃-C₁₈, un triarylsilyle, un aryl-alkylsilyle en C₈-C₁₈, un radical alkyle en C₁-C₁₈ linéaire, partiellement cyclique ou ramifié, en particulier un radical alkyle en C₁-C₇, un radical cycloalcoxy en C₃-C₁₂, en particulier un radical cycloalcoxy en C₃-C₆, un radical alcoxy en C₁-C₁₈ linéaire, partiellement cyclique ou ramifié, en particulier un radical alcoxy en C₁-C₇, un radical cycloalcoxy en C₃-C₁₂, en particulier un radical cycloalcoxy en C₃-C₆, un radical polyoxaalkyle en C₆-C₁₀₀ linéaire, partiellement cyclique ou ramifié, en particulier un radical polyoxaalkyle en C₆-C₃₀, un radical aryle ou hétéroayle en C₅-C₁₄, un radical aryloxy ou hétéroaryloxy en C₅-C₁₄, un radical arylthio ou hétéroarylthio en C₅-C₁₄, un radical perhaloalkyle en C₁-C₁₈ linéaire, partiellement cyclique ou ramifié, en particulier un radical perhaloalkyle en C₁-C₇, un radical perhaloalcoxy en C₁-C₁₈ linéaire, partiellement cyclique ou ramifié, en particulier un radical perhaloalcoxy en C₁-C₇, un radical alkyle en C₁-C₁₈ partiellement halogéné linéaire, partiellement cyclique ou ramifié, en particulier un radical alkyle en C₁-C₇ partiellement halogéné, un radical alcoxy en C₁-C₁₈ partiellement halogéné linéaire, partiellement cyclique ou ramifié, en particulier un radical alcoxy en C₁-C₇ partiellement halogéné, un radical aryle en C₆-C₁₄ perhalogéné ou partiellement halogéné, un radial aryloxy en C₆-C₁₄ perhalogéné ou partiellement halogéné, l'halogène étant = F, Cl, Br, I,
M représente dans les formules I, II, III, IV, V ou VI Mo ou W,
L est un emplacement de coordination libre ou un solvant de coordination, en particulier sous la forme de diéthyléther, d'acétonitrile, de tétrahydrofurane, de triméthylacétonitrile, de pyridine ou de lutidine,
peut coordonner dans les formules IV, V ou VI également plusieurs molécules de solvant, dans lequel celles-ci peuvent avoir la signification mentionnée plus haut pour L,
R¹ est dans les formules I à VI indépendamment les unes des autres H ou un radical aliphatique ou aromatique, en particulier un groupe alkyle en C₁-C₁₈ linéaire ou ramifié, de manière préférée sous la forme d'un groupe tert-butyle, d'un groupe méthyle, d'un groupe 4-méthoxyphényle ou d'un groupe ferrocényle, ou un groupe aryle en C₆-C₁₄ non substitué ou substitué une fois ou plusieurs fois, dans lequel les substituants ont les significations mentionnées pour R², et
Z¹ et Z² sont indépendamment l'un de l'autre un groupe alkylèneoxy en C₁-C₁₀ linéaire, partiellement cyclique ou ramifié, en particulier un groupe alkylèneoxy en C₁-C₅, un groupe alkylènethio en C₁-C₁₀ linéaire, partiellement cyclique ou ramifié, en particulier un groupe alkylènethio en C₁-C₅, un groupe alkylène-NR² en C₁-C₁₀ linéaire partiellement cyclique ou ramifié, en particulier un groupe alkylène-NR² en C₁-C₅, un groupe arylèneoxy en C₆-C₁₀, un groupe arylèneoxy en C₆-C₁₄ perfluoré ou partiellement fluoré, un groupe arylèneoxy en C₆-C₁₄ perchloré ou partiellement chloré, un groupe arylèneoxy en C₆-C₁₄ perbromuré ou partiellement bromuré, un groupe arylènethio en C₆-C₁₄, un groupe arylènethio en C₆-C₁₄ perfluoré ou partiellement fluoré, un groupe arylènethio en C₆-C₁₄ perchloré ou partiellement chloré, un groupe arylènethio en C₆-C₁₄ perbromuré ou partiellement bromuré ou un groupe arylène-NR² en C₆-C₁₄, un groupe arylène-NR² en C₆-C₁₄ perfluoré ou partiellement fluoré, un groupe arylène-NR² en C₆-C₁₄ perchloré ou partiellement chloré, un groupe arylène-NR² en C₆-C₁₄ perbromuré ou partiellement bromuré, un groupe arylène-PR² en C₆-C₁₄, un groupe arylène-PR² en C₆-C₁₄ perfluoré ou partiellement fluoré, un groupe arylène-PR² en C₆-C₁₄ perchloré ou partiellement chloré, un groupe arylène-PR² en C₆-C₁₄ perbromuré ou partiellement bromuré, un groupe carboxyle, un groupe thiocarboxyle ou un groupe dithiocarboxyle.

2. Complexe selon la revendication 1, **caractérisé en ce que** le composé cyclique B est un hétérocycle choisi parmi le groupe comprenant le 1,3-imidazole-2-ylidène disubstitué, le 1,3-imidazoline-2-ylidène disubstitué, le 1,3-imidazole-5-ylidène disubstitué, le 1,3-tétrahydropyrimidine-2-ylidène disubstitué, le 1,3-diazépine-2-ylidène disubstitué, le 1,3-dihydrodiazépine-2-ylidène disubstitué, le 1,3-tétrahydrodiazépine-2-ylidène disubstitué, le thiazole-2-ylidène substitué en N, le thiazoline-2-ylidène substitué en N, le triazole-2-ylidène substitué en N, le dihydrotriazole-2-ylidène substitué en N, le triazoline-2-ylidène substitué une fois ou plusieurs fois, le thiadiazole-2-ylidène substitué en N, le thiadiazoline-2-ylidène substitué une fois ou plusieurs fois, le tétrahydrotriazole-2-ylidène substitué une fois ou plusieurs fois, le 1,2,3-triazole-5-ylidène substitué une fois ou plusieurs fois, ou l'oxazole-2-ylidène substitué une fois ou plusieurs fois ou le 1,2,4-triazole-3-ylidène.

3. Complexe selon la revendication 2, **caractérisé en ce que** le composé cyclique B est un hétérocyle choisi parmi le groupe comprenant le 1,3-imidazole-2-ylidène disubstitué, le 1,3-imidazoline-2-ylidène disubstitué, le 1,3-imidazole-5-ylidène disubstitué, le thiazole-2-ylidène substitué en N et le thiazoline-2-ylidène substitué en N.

4. Complexe selon au moins l'une quelconque des revendications 1 à 3, **caractérisé en ce que** le composé cyclique B est lié de manière covalente par l'intermédiaire d'un groupe d'espacement à un support fixe.

5. Complexe selon au moins l'une quelconque des revendications 1 à 3, **caractérisé en ce que** X¹ et/ou X² sont liés de manière covalente par l'intermédiaire d'un groupe d'espacement à un support fixe.

6. Complexe selon les revendications 4 ou 5, **caractérisé en ce que** le support fixe est un support polymère, en particulier à base de PS-DVB, et le groupe d'espacement est de manière préférée un groupe α,ω-dioxaalkylène en C₁-C₂₀ ou un groupe alkylèneoxy en C₁-C₂₀.

7. Complexe selon les revendications 4 ou 5, **caractérisé en ce que** le support fixe est un support inorganique, en particulier à base de dioxyde de silicium, et le groupe d'espacement ou X¹ et/ou X² sont de manière préférée un groupe alkyle-Si(O)₃, un groupe alkyle-aryle-SiR(O)₂, un groupe diaryle-SiR-(O)₂ ou un groupe OSi(O)₃, où les groupes alkyle peuvent être des groupes alkyle en C₁-C₁₈ linéaires, partiellement cycliques ou ramifiés, en particulier des groupes alkyle en C₁-C₇, des groupes cycloalkyle en C₃-C₁₂, en particulier des groupes cycloalkyle en C₃-C₆, et les groupes aryle peuvent être des groupes aryle en C₆-C₁₄ substitués une fois ou plusieurs fois, dans lequel les substituants peuvent avoir les significations mentionnées pour R².

8. Complexe selon au moins l'une quelconque des revendications 1 à 3, **caractérisé en ce que** M est lié directement par l'intermédiaire d'un atome d'oxygène à un support fixe, dans lequel le support est de préférence un support oxydé inorganique, est de manière particulièrement préférée à base de dioxyde de silicium.

9. Utilisation d'un complexe selon au moins l'une quelconque des revendications précédentes en tant que catalyseur dans des réactions de métathèse d'alcynes.

10. Utilisation selon la revendication 9, **caractérisée en ce que** les réactions de métathèse d'alcynes sont une métathèse par fermeture de cycle asymétrique ou de désymétrisation, une métathèse croisée, une métathèse croisée d'ouverture de cycle ou une polymérisation diine.

11. Utilisation des composés selon au moins l'une quelconque des revendications précédentes en tant que catalyseur dans la polymérisation d'oléfines cycliques.
